# EUROPÄISCHE PATENTSCHRIFT

(11) **EP 3 069 046 B1**
(45) Veröffentlichungstag und Bekanntmachung des Hinweises auf die Patenterteilung: **01.04.2020**
(21) Anmeldenummer: 14793787.4
(22) Anmeldetag: 04.11.2014
(51) Int. Cl.: F16H 3/00, F16H 3/093

(54) **DOPPELKUPPLUNGSGETRIEBE**
DUAL-CLUTCH TRANSMISSION
TRANSMISSION À DOUBLE EMBRAYAGE

(30) Priorität: 15.11.2013 DE 102013019121
(43) Veröffentlichungstag der Anmeldung: 21.09.2016
(73) Patentinhaber: Daimler AG, 70372 Stuttgart (DE)
(72) Erfinder: BENDER, Helmut, 74385 Pleidelsheim (DE); BOU ROMANO, Josep Maria, 70188 Stuttgart (DE); STRAUB, Heinrich, 70327 Stuttgart (DE); HAHN, Peter, 70374 Stuttgart (DE); SPERRFECHTER, Stefan, 73072 Donzdorf (DE); SCHWEITZER, Jürgen, 70794 Filderstadt (DE); HÄRTER, Tobias, 70174 Stuttgart (DE); ROMANIAK, Jakub, 70186 Stuttgart (DE)
(74) Vertreter: JENSEN & SON
(86) Internationale Anmeldenummer: PCT/EP2014/002954
(87) Internationale Veröffentlichungsnummer: WO 2015/070958

(56) Entgegenhaltungen:
- EP-A2- 1 975 461
- WO-A1-2013/113463
- DE-A1-102007 010 871
- DE-A1-102010 013 650
- DE-A1-102010 055 645

## Beschreibung

Die Erfindung betrifft ein Doppelkupplungsgetriebe für einen Antriebsstrang eines Kraftfahrzeugs.

Aus der DE 10 2009 002 353 A1 ist bereits ein Doppelkupplungsgetriebe mit zwei Eingangswellen, die jeweils zur Anbindung an eine Lastschaltkupplung vorgesehen sind, mit einer ersten zu den Eingangswellen parallel versetzt angeordneten Vorgelegewelle, mit einer zweiten zu den Eingangswellen parallel versetzt angeordneten Vorgelegewelle, mit fünf Zahnradebenen und neun Schalteinheiten, bekannt.

Aus der DE 10 2010 055645 A1 ist ein Doppelkupplungsgetriebe mit zumindest fünf Zahnradebenen, die jeweils ein permanent drehfest mit einer von zwei Eingangswellen verbundenes Festrad aufweisen, wobei eine der Zahnradebenen ein koaxial zu einer ersten Vorgelegewelle angeordnetes Losrad und ein koaxial zu einer zweiten Vorgelegewelle angeordnetes Losrad aufweist, die eine Zahnradpaarung zur Schaltung zumindest eines Rückwärtsgetriebegangs ausbilden, bekannt. Dieses bekannte Doppelkupplungsgetriebe weist ferner neun Schalteinheiten zur Schaltung von zumindest acht sequentiell schaltbaren Vorwärtsgetriebegängen und eines Rückwärtsgetriebegangs auf. Ferner weist es ein permanent drehfest mit der ersten Vorgelegewelle verbundenes Abtriebsrad und ein permanent drehfest mit der zweiten Vorgelegewelle verbundenes Abtriebsrad auf.

Der Erfindung liegt insbesondere die Aufgabe zugrunde, ein kompaktes Doppelkupplungsgetriebe mit einer hohen Flexibilität bereitzustellen. Diese Aufgabe wird gemäß der Erfindung durch ein Doppelkupplungsgetriebe mit den Merkmalen des Anspruchs 1 gelöst. Weitere Ausgestaltungen ergeben sich aus den Unteransprüchen.

Zugrunde gelegt wird ein Doppelkupplungsgetriebe mit zwei Eingangswellen, die jeweils zur Anbindung an eine Lastschaltkupplung vorgesehen sind, mit einer ersten zu den Eingangswellen parallel versetzt angeordneten Vorgelegewelle, mit einer zweiten zu den Eingangswellen parallel versetzt angeordneten Vorgelegewelle, mit zumindest fünf Zahnradebenen, die jeweils ein permanent drehfest mit einer der Eingangswellen verbundenes Festrad aufweisen, wobei eines der Zahnradebenen ein koaxial zu der ersten Vorgelegewelle angeordnetes Losrad und ein koaxial zu der zweiten Vorgelegewelle angeordnetes Losrad aufweist, die eine Zahnradpaarung zur Schaltung zumindest eines Rückwärtsgetriebegangs ausbilden, mit zumindest neun Schalteinheiten zur Herstellung von Wirkverbindungen zwischen den Eingangswellen und/oder den Vorgelegewellen, die in Verbindung mit den Zahnradebenen zumindest konstruktiv zur Schaltung von zumindest acht sequentiell schaltbaren Vorwärtsgetriebegängen und des zumindest einen Rückwärtsgetriebegangs vorgesehenen sind, mit einem permanent drehfest mit der ersten Vorgelegewelle verbundenen Abtriebsrad und mit einem permanent drehfest mit der zweiten Vorgelegewelle verbundenen Abtriebsrad.

Weiter wird zugrunde gelegt ein Doppelkupplungsgetriebe mit zwei Eingangswellen, die jeweils zur Anbindung an eine Lastschaltkupplung vorgesehen sind, mit einer ersten zu den Eingangswellen parallel versetzt angeordneten Vorgelegewelle, mit einer zweiten zu den Eingangswellen parallel versetzt angeordneten Vorgelegewelle, mit zumindest fünf Zahnradebenen, die jeweils ein permanent drehfest mit einer der Eingangswellen verbundenes Festrad aufweisen, wobei eines der Zahnradebenen ein koaxial zu der ersten Vorgelegewelle angeordnetes Losrad und ein koaxial zu der zweiten Vorgelegewelle angeordnetes Losrad aufweist, die eine Zahnradpaarung zur Schaltung zumindest eines Rückwärtsgetriebegangs ausbilden, mit einem koaxial zur ersten Vorgelegewelle angeordneten Abtriebsrad, mit einem permanent drehfest mit der zweiten Vorgelegewelle verbundenen Abtriebsrad, mit zumindest acht Schalteinheiten zur Herstellung von Wirkverbindungen zwischen den Eingangswellen und/oder den Vorgelegewellen und mit zumindest einer Schalteinheit zur Herstellung einer Wirkverbindung zwischen dem koaxial zur ersten Vorgelegewelle angeordneten Abtriebsrad und der ersten Vorgelegewelle, wobei die zumindest neun Schalteinheiten in Verbindung mit den Zahnradebenen zumindest konstruktiv zur Schaltung von zumindest acht sequentiell schaltbaren Vorwärtsgetriebegängen und des zumindest einen Rückwärtsgetriebegangs vorgesehenen sind.

Das Doppelkupplungsgetriebe ist als ein Vorgelegewellengetriebe ausgebildet und umfasst eine Hauptrotationsachse und zwei Nebenrotationsachsen. Unter einer "Hauptrotationsachse" soll dabei insbesondere eine durch die Eingangswellen definierte Rotationsachse verstanden werden. Unter einer "Nebenrotationsachse" soll insbesondere eine parallel zur Hauptrotationsachse versetzt angeordnete, durch eine Vorgelegewelle definierte Rotationsachse verstanden werden.

Weiter soll unter einer "Schalteinheit" insbesondere eine Einheit mit genau zwei Kopplungselementen verstanden werden, die dazu vorgesehen ist, zwei drehbar zueinander gelagerte Getriebeelemente, wie beispielsweise ein Losrad und eine Vorgelegewelle oder benachbarte Losräder unterschiedlicher Zahnradebenen, schaltbar drehfest miteinander zu verbinden. Zwei benachbarte Schalteinheiten können dabei grundsätzlich zu einer gemeinsamen Doppelschalteinheit zusammengefasst werden, indem beispielsweise ein gemeinsames Kopplungselement für beide Schalteinheiten vorgesehen wird. Jede der Schalteinheiten kann grundsätzlich als rein formschlüssige Schalteinheit, beispielsweise als Klauenkupplung, als form- und reibschlüssige Schalteinheit, beispielsweise in Form einer synchronisierten Klauenkupplung, oder als rein reibschlüssige Schalteinheit, beispielsweise in Form einer Lamellenkupplung, ausgeführt werden.

Unter einer "Zahnradebene" soll weiter insbesondere eine Getriebeebene verstanden werden, die zumindest eine Zahnradpaarung mit zumindest zwei miteinander kämmenden Zahnrädern aufweist, die in zumindest einem der Getriebegänge zur Übertragung eines Leistungsflusses vorgesehen sind. Vorzugsweise sind innerhalb einer Zahnradebene sämtliche Zahnräder jeweils paarweise miteinander wirkverbunden. Beispielsweise bilden mehrere Zahnradpaarungen eine einzige Zahnradebene aus, wenn die unterschiedlichen Zahnradpaarungen zumindest ein gemeinsames Festrad oder zumindest ein gemeinsames Losrad aufweisen. Insbesondere die Losräder können dabei eine Doppelverzahnung aufweisen.

Unter einer "Ausgangszahnradebene" soll insbesondere eine zusätzliche Zahnradebene verstanden werden, über die in sämtlichen Getriebegängen ein Leistungsfluss aus dem Doppelkupplungsgetriebe ausgeleitet wird. Unter einem "Festrad" soll dabei insbesondere ein Zahnrad einer Zahnradebene verstanden werden, das permanent drehfest mit einer der Eingangswellen oder einer der Vorgelegewellen verbunden ist, auf der zumindest ein Losrad angeordnet ist. Unter einem "Losrad" soll insbesondere ein einzelnes, drehbar zu einer Welle angeordnetes Zahnrad einer Zahnradebene verstanden werden, das lediglich mit zumindest einem Kopplungselement einer Schalteinheit permanent drehfest verbunden ist. Unter einer "Windungsstufe" soll insbesondere eine Kopplung von zwei Los- oder Festrädern verstanden werden, die in zumindest einem als Windungsgang ausgebildeten Getriebegang dazu vorgesehen ist, einen Leistungsfluss zwischen den zwei Los- oder Festrädern verschiedener Zahnradebenen zu übertragen. Zur Kopplung der Los- oder Festräder ist dabei vorzugsweise eine der Schalteinheiten, eine der Eingangswellen, eine der Vorgelegewellen oder eine Zwischenwelle vorgesehen. Unter einem "Windungsgang" soll ferner insbesondere ein Getriebegang verstanden werden, der durch zumindest eine Windungsstufe gebildet ist.

Unter "konstruktiv zur Schaltung von Getriebegängen vorgesehen" soll insbesondere verstanden werden, dass mechanisch ein entsprechender Getriebegang grundsätzlich bildbar ist, unabhängig davon, ob im Rahmen einer Schaltstrategie auf die Schaltung des Getriebegangs verzichtet wird oder nicht. Unter "vorgesehen" soll insbesondere speziell ausgebildet, ausgelegt, ausgestattet und/oder angeordnet verstanden werden.

Eine in der Figurenbeschreibung und/oder den Patentansprüchen verwendete Nummerierung der Zahnradebenen dient insbesondere zur Unterscheidung der Zahnradebenen. Die Nummerierung entspricht insbesondere nicht einer Anordnung, in der die Zahnradebenen entlang der Haupterstreckungsrichtung hintereinander angeordnet sind. Analog dient eine in der Figurenbeschreibung und/oder den Patentansprüchen verwendete Nummerierung der Schalteinheiten insbesondere zur Unterscheidung der Schalteinheiten. Die Nummerierung entspricht insbesondere nicht einer Anordnung, in der die Schalteinheiten entlang der Haupterstreckungsrichtung hintereinander angeordnet sind. Die Begriffe "erste", "zweite", usw. stellen damit insbesondere keine Reihenfolge, beispielsweise im Hinblick auf eine Anordnung, einen Kraftfluss, einen Antrieb oder dergleichen dar.

Grundsätzlich kann durch folgende Maßnahmen ein kinematisch äquivalentes Ausführungsbeispiel realisiert werden:
- Vertauschen einer Anordnung der Zahnradebenen und/oder der Schalteinheiten, insbesondere durch Vertauschen von Zahnradebenen, deren Fest- oder Losrad an gleicher Eingangswelle angeordnet ist und/oder denen eine Doppelschalteinheit zugeordnet ist;
- Vertauschen der Abtriebswellen bzw. vertauschte Vorgelegewellen;
- Vertauschen von Teilgetrieben, wobei ein Teilgetriebe lediglich Zahnradebenen aufweist, deren Fest- oder Losräder an gleicher Eingangswelle angebunden sind;
- Auftrennen von Doppelradebenen in zwei Einfachradebenen;
- Änderung einer Anordnung eines Parksperrenrads;
- drehbare Anordnung eines Abtriebsrads auf einer Vorgelegewelle.

Weitere Vorteile ergeben sich aus der folgenden Figurenbeschreibung. In den Figuren sind fünf Ausführungsbeispiele der Erfindung dargestellt. Die Figuren, die Figurenbeschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: ein erstes Getriebeschema eines erfindungsgemäßen Doppelkupplungsgetriebes für ein Kraftfahrzeug, mit zwei permanent drehfest verbundenen Abtriebsrädern,
- Fig. 2: ein Schaltschema des Doppelkupplungsgetriebes der Figur 1,
- Fig. 3: ein zweites Getriebeschema eines erfindungsgemäßen Doppelkupplungsgetriebes für ein Kraftfahrzeug, mit zwei permanent drehfest verbundenen Abtriebsrädern,
- Fig. 4: ein drittes Getriebeschema eines erfindungsgemäßen Doppelkupplungsgetriebes für ein Kraftfahrzeug, mit lediglich einem permanent drehfest verbundenen Abtriebsrad,
- Fig. 5: ein Schaltschema des Doppelkupplungsgetriebes der Figur 4,
- Fig. 6: ein viertes Getriebeschema eines erfindungsgemäßen Doppelkupplungsgetriebes für ein Kraftfahrzeug, mit lediglich einem permanent drehfest verbundenen Abtriebsrad,
- Fig. 7: ein Schaltschema des Doppelkupplungsgetriebes der Figur 6,
- Fig. 8: ein fünftes Getriebeschema eines erfindungsgemäßen Doppelkupplungsgetriebes für ein Kraftfahrzeug, mit lediglich einem permanent drehfest verbundenen Abtriebsrad und
- Fig. 9: ein Schaltschema des Doppelkupplungsgetriebes der Figur 8.

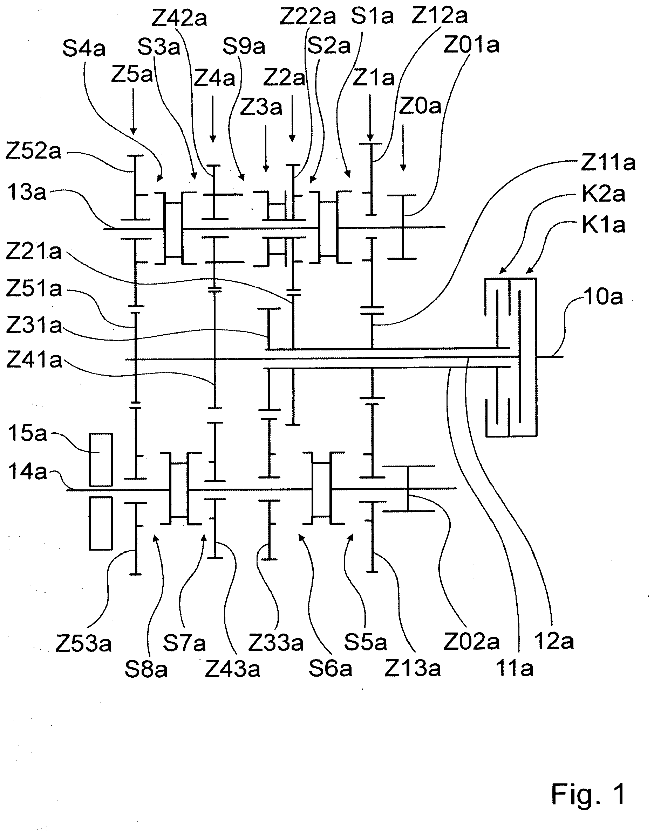

Figur 1 zeigt ein Getriebeschema eines Doppelkupplungsgetriebes eines Kraftfahrzeugs. Das Doppelkupplungsgetriebe ist für einen Front-Quer-Einbau vorgesehen, d.h. für ein Kraftfahrzeug, das eine quer zur Fahrtrichtung angeordnete Antriebsmaschine und eine angetriebene Vorderachse aufweist. Das Doppelkupplungsgetriebe umfasst eine Antriebswelle 10a, die zur drehfesten Anbindung an die Antriebsmaschine vorgesehen ist. Weiter umfasst das Doppelkupplungsgetriebe eine Eingangskupplung, die zwei im Kraftfluss parallel angeordnete Lastschaltkupplungen K1a, K2a umfasst. Zudem umfasst das Doppelkupplungsgetriebe ein nicht näher dargestelltes Abtriebszahnrad, das zur Anbindung an einen nicht näher dargestellten Achsantrieb für Antriebsräder des Kraftfahrzeugs vorgesehen ist. Das Doppelkupplungsgetriebe ist zur Schaltung von neun Vorwärtsgetriebegängen V1a, V2a, V3a, V4a, V5a, V6a, V7a, V8a, V9a vorgesehen. Die ersten acht Vorwärtsgetriebegänge V1a-V8a sind unter Last zumindest sequentiell schaltbar und damit sequentiell lastschaltbar. Der neunte Vorwärtsgetriebegang V9a ist mit Zugkraftunterbrechung schaltbar und damit nicht lastschaltbar. Dabei sind der erste Vorwärtsgetriebegang V1a und der neunte Vorwärtsgetriebegang V9a jeweils geschleift und damit als ein Windungsgang ausgebildet. Zudem ist das Doppelkupplungsgetriebe zur Schaltung von zwei Rückwärtsgetriebegängen R1a, R2a vorgesehen. Dabei ist der Rückwärtsgetriebegang R2a als ein Windungsgang ausgebildet.

Das Doppelkupplungsgetriebe ist in Vorgelegewellenbauweise ausgeführt. Die Antriebswelle 10a und das Abtriebszahnrad sind parallel versetzt zueinander angeordnet. Zur Herstellung einer Wirkverbindung zwischen der Antriebswelle 10a und dem Abtriebszahnrad umfasst das Doppelkupplungsgetriebe zwei Eingangswellen 11a, 12a, die jeweils an eine der Lastschaltkupplungen K1a, K2a angebunden sind. Die Lastschaltkupplungen K1a, K2a umfassen jeweils ein eingangsseitiges Lastschaltkupplungselement, das permanent drehfest mit der Antriebswelle 10a verbunden ist, und ein ausgangsseitiges Lastschaltkupplungselement. Die Eingangswellen 11a, 12a sind drehfest mit jeweils einem der ausgangsseitigen Lastschaltkupplungselemente verbunden. Die erste Eingangswelle 11a ist der zweiten Lastschaltkupplung K2a zugeordnet. Das ausgangsseitige Lastschaltkupplungselement der zweiten Lastschaltkupplung K2a ist permanent drehfest mit der ersten Eingangswelle 11a verbunden. Die zweite Eingangswelle 12a ist der ersten Lastschaltkupplung K1a zugeordnet. Das ausgangsseitige Lastschaltkupplungselement der ersten Lastschaltkupplung K1a ist permanent drehfest mit der zweiten Eingangswelle 12a verbunden.

Weiter umfasst das Doppelkupplungsgetriebe eine erste Vorgelegewelle 13a, die parallel versetzt zu den Eingangswellen 11a, 12a und dem Abtriebszahnrad angeordnet ist, sowie eine zweite Vorgelegewelle 14a, die parallel versetzt zu den Eingangswellen 11a, 12a, dem Abtriebszahnrad und der ersten Vorgelegewelle 13a angeordnet ist. Die Antriebswelle 10a und die beiden Eingangswellen 11a, 12a sind entlang einer Haupterstreckungsrichtung des Doppelkupplungsgetriebes hintereinander angeordnet. Die beiden Eingangswellen 11a, 12a sind koaxial zueinander angeordnet, wobei die zweite Eingangswelle 12a die erste Eingangswelle 11a durchsetzt. Die erste Eingangswelle 11a ist als eine Hohlwelle und die zweite Eingangswelle 12a als eine Vollwelle ausgebildet. Die Antriebswelle 10a und die Eingangswellen 11a, 12a definieren eine Hauptrotationsachse des Doppelkupplungsgetriebes. Die beiden Vorgelegewellen 13a, 14a definieren jeweils eine Nebenrotationsachse. In einer nicht näher dargestellten Schnittebene spannen die Hauptrotationsachse, die Nebenrotationsachsen und eine durch das Abtriebszahnrad definierte Rotationsachse ein Viereck auf.

Das Doppelkupplungsgetriebe weist genau fünf Zahnradebenen Z1a, Z2a, Z3a, Z4a, Z5a auf. Die fünf Zahnradebenen Z1a, Z2a, Z3a, Z4a, Z5a sind zur Bildung der neun Vorwärtsgetriebegänge V1a-V9a und der zwei Rückwärtsgetriebegänge R1a, R2a vorgesehen. Weiter weist das Doppelkupplungsgetriebe genau eine Ausgangszahnradebene Z0a auf, die lediglich zur Anbindung des Abtriebszahnrads und damit zur Ausleitung eines Drehmoments aus dem Doppelkupplungsgetriebe vorgesehen ist. Die erste Zahnradebene Z1a dient insbesondere zur Verbindung der ersten Eingangswelle 11a mit der ersten Vorgelegewelle 13a und zur Verbindung der ersten Eingangswelle 11a mit der zweiten Vorgelegewelle 14a. Die zweite Zahnradebene Z2a dient insbesondere zur Verbindung der ersten Eingangswelle 11a mit der ersten Vorgelegewelle 13a. Die dritte Zahnradebene Z3a dient insbesondere zur Verbindung der ersten Eingangswelle 11a mit der zweiten Vorgelegewelle 14a. Die vierte Zahnradebene Z4a dient insbesondere zur Verbindung der zweiten Eingangswelle 12a mit der ersten Vorgelegewelle 13a sowie zur Drehrichtungsumkehr. Die fünfte Zahnradebene Z5a dient insbesondere zur Verbindung der zweite Eingangswelle 12a mit der ersten Vorgelegewelle 13a und zur Verbindung der zweiten Eingangswelle 12a mit der zweiten Vorgelegewelle 14a.

Das Doppelkupplungsgetriebe kann grundsätzlich um ein Hybridantriebsmodul erweitert werden. Beispielsweise ist es denkbar, dass das Doppelkupplungsgetriebe eine permanent an die Antriebswelle 10a angebundene Antriebsmaschine aufweist. Mittels einer solchen Antriebsmaschine kann beispielsweise eine Starter-Generator-Betriebsart realisiert werden. Zur Realisierung weiterer Hybrid-Betriebsarten ist es denkbar, dass das Doppelkupplungsgetriebe eine permanent oder schaltbar an eine der Vorgelegewellen 13a, 14a angebundene Antriebsmaschine aufweist. Ebenfalls ist es denkbar, dass das Doppelkupplungsgetriebe eine permanent oder schaltbar an eine der Eingangswellen 11a, 12a angebundene Antriebsmaschine aufweist.

Die Ausgangszahnradebene Z0a liegt in Bezug auf die Zahnradebenen Z1a, Z2a, Z3a, Z4a, Z5a der Eingangskupplung am nächsten. Grundsätzlich kann die Ausgangszahnradebene Z0a aber an einer beliebigen Stelle angeordnet werden. Die Ausgangszahnradebene Z0a umfasst zwei Abtriebsräder Z01a, Z02a. Das erste Abtriebsrad Z01a ist koaxial zu der ersten Vorgelegewelle 13a angeordnet und permanent drehfest mit der ersten Vorgelegewelle 13a verbunden. Das zweite Abtriebsrad Z02a ist koaxial zu der zweiten Vorgelegewelle 14a angeordnet und permanent drehfest mit der zweiten Vorgelegewelle 14a verbunden. Beide Abtriebsräder Z01a, Z02a kämmen mit dem nicht näher dargestellten Abtriebszahnrad. Beide Vorgelegewellen 13a, 14a sind mit dem Abtriebszahnrad permanent wirkverbunden. Die Ausgangszahnradebene Z0a ist in sämtlichen Vorwärtsgetriebegängen V1a-V9a und in den Rückwärtsgetriebegängen R1a, R2a dazu vorgesehen, ein Drehmoment aus dem Doppelkupplungsgetriebe auszuleiten.

Die erste Zahnradebene Z1a liegt in Bezug auf die restlichen Zahnradebenen Z2a, Z3a, Z4a, Z5a der Eingangskupplung am nächsten. Die erste Zahnradebene Z1a umfasst ein Festrad Z11a, ein erstes Losrad Z12a und ein zweites Losrad Z13a. Das Festrad Z11a der ersten Zahnradebene Z1a ist koaxial zu den Eingangswellen 11a, 12a angeordnet und permanent drehfest mit der ersten Eingangswelle 11a verbunden. Das erste Losrad Z12a der ersten Zahnradebene Z1a ist koaxial zu der ersten Vorgelegewelle 13a angeordnet und drehbar auf der ersten Vorgelegewelle 13a gelagert. Das zweite Losrad Z13a der ersten Zahnradebene Z1a ist koaxial zu der zweiten Vorgelegewelle 14a angeordnet und drehbar auf der zweiten Vorgelegewelle 14a gelagert. Das Festrad Z11a und das erste Losrad Z12a bilden eine erste Zahnradpaarung der ersten Zahnradebene Z1a aus, die zur Bildung des Vorwärtsgetriebegangs V8a vorgesehen ist. Das Festrad Z11a und das zweite Losrad Z13a bilden eine zweite Zahnradpaarung der ersten Zahnradebene Z1a aus, die zur Bildung des Vorwärtsgetriebegangs V6a vorgesehen ist. Die erste Zahnradebene Z1a weist somit zwei Losräder Z12a, Z13a auf, die beide mit dem Festrad Z11a der ersten Zahnradebene Z1a permanent kämmend verbunden sind. Die erste Zahnradebene Z1a ist damit als Doppelradebene ausgebildet.

Die zweite Zahnradebene Z2a ist ausgehend von der Eingangskupplung entlang der Haupterstreckungsrichtung nach der ersten Zahnradebene Z1a angeordnet. Die zweite Zahnradebene Z2a weist ein Festrad Z21a und lediglich ein Losrad Z22a auf. Das Festrad Z21a der zweiten Zahnradebene Z2a ist koaxial zu den Eingangswellen 11a, 12a angeordnet und permanent drehfest mit der ersten Eingangswelle 11a verbunden. Das Losrad Z22a der zweiten Zahnradebene Z2a ist koaxial zu der ersten Vorgelegewelle 13a angeordnet und drehbar auf der ersten Vorgelegewelle 13a gelagert. Das Festrad Z21a und das Losrad Z22a bilden eine einzige Zahnradpaarung der zweiten Zahnradebene Z2a aus, die zur Bildung der Vorwärtsgetriebegänge V1a, V4a vorgesehen ist. Die zweite Zahnradebene Z2a weist somit ein einziges Losrad Z22a auf, das mit dem Festrad Z21a der zweiten Zahnradebene Z2a permanent kämmend verbunden ist. Die zweite Zahnradebene Z2a ist damit als Einfachradebene ausgebildet.

Die dritte Zahnradebene Z3a ist ausgehend von der Eingangskupplung entlang der Haupterstreckungsrichtung nach der zweiten Zahnradebene Z2a angeordnet. Die dritte Zahnradebene Z3a weist ein Festrad Z31a und lediglich ein Losrad Z33a auf. Das Festrad Z31a der dritten Zahnradebene Z3a ist koaxial zu den Eingangswellen 11a, 12a angeordnet und permanent drehfest mit der ersten Eingangswelle 11a verbunden. Das Losrad Z33a der dritten Zahnradebene Z3a ist koaxial zu der zweiten Vorgelegewelle 14a angeordnet und drehbar auf der zweiten Vorgelegewelle 14a gelagert. Das Festrad Z31a und das Losrad Z33a bilden eine einzige Zahnradpaarung der dritten Zahnradebene Z3a aus, die zur Bildung der Vorwärtsgetriebegänge V1a, V2a vorgesehen ist. Die dritte Zahnradebene Z3a weist somit ein einziges Losrad Z33a auf, das mit dem Festrad Z31a der dritten Zahnradebene Z3a permanent kämmend verbunden ist. Die dritte Zahnradebene Z3a ist damit als Einfachradebene ausgebildet.

Die vierte Zahnradebene Z4a ist ausgehend von der Eingangskupplung entlang der Haupterstreckungsrichtung nach der dritten Zahnradebene Z3a angeordnet. Die vierte Zahnradebene Z4a weist ein Festrad Z41a, ein erstes Losrad Z42a und ein zweites Losrad Z43a auf. Das Festrad Z41a der vierten Zahnradebene Z4a ist koaxial zu den Eingangswellen 11a, 12a angeordnet und permanent drehfest mit der zweiten Eingangswelle 12a verbunden. Das erste Losrad Z42a der vierten Zahnradebene Z4a ist koaxial zu der ersten Vorgelegewelle 13a angeordnet und drehbar auf der ersten Vorgelegewelle 13a gelagert. Das zweite Losrad Z43a der vierten Zahnradebene Z4a ist koaxial zu der zweiten Vorgelegewelle 14a angeordnet und drehbar auf der zweiten Vorgelegewelle 14a gelagert. Das zweite Losrad Z43a der vierten Zahnradebene Z4a ist lediglich zur Bildung der Rückwärtsgetriebegänge R1a, R2a vorgesehen. Es ist zur Drehrichtungsumkehr vorgesehen. Das Festrad Z41a und das Losrad Z42a bilden eine erste Zahnradpaarung der vierten Zahnradebene Z4a aus, die zur Bildung der Vorwärtsgetriebegänge V1a, V3a und der Rückwärtsgetriebegänge R1a, R2a vorgesehen ist. Das erste Losrad Z42a und das zweite Losrad Z43a bilden eine zweite Zahnradpaarung der vierten Zahnradebene Z4a aus, die gemeinsam mit der ersten Zahnradpaarung der vierten Zahnradebene Z4a zur Bildung der Rückwärtsgetriebegänge R1a, R2a vorgesehen ist. Die beiden Zahnradpaarungen der vierten Zahnradebene Z4a stellen eine Drehrichtungsumkehr zur Bildung der Rückwärtsgetriebegänge R1a, R2a bereit. Das erste Losrad Z42a der vierten Zahnradebene Z4a und das zweite Losrad Z43a der vierten Zahnradebene Z4a bilden die Zahnradpaarung zur Schaltung der Rückwärtsgetriebegänge R1a, R2a aus. Die beiden Losräder Z42a, Z43a der vierten Zahnradebene Z4a sind zur Schaltung der Rückwärtsgetriebegänge R1a, R2a vorgesehen. Die vierte Zahnradebene Z4a weist somit ein einziges Losrad Z42a auf, das mit dem Festrad Z41a der vierten Zahnradebene Z4a permanent kämmend verbunden ist. Die vierte Zahnradebene Z4a ist damit als Einfachradebene ausgebildet. Dabei ist das zweite Losrad Z43a der vierten Zahnradebene Z4a zur Drehrichtungsumkehr permanent kämmend mit dem ersten Losrad Z42a, das permanent kämmend mit dem Festrad Z41a der vierten Zahnradebene Z4a verbundenen ist, verbunden. Das erste Losrad Z42a der vierten Zahnradebene Z4a weist eine Einfachverzahnung auf.

Die fünfte Zahnradebene Z5a ist ausgehend von der Eingangskupplung entlang der Haupterstreckungsrichtung nach der vierten Zahnradebene Z4a angeordnet. Die fünfte Zahnradebene Z5a weist ein Festrad Z51a, ein erstes Losrad Z52a und ein zweites Losrad Z53a auf. Das Festrad Z51a der fünften Zahnradebene Z5a ist koaxial zu den Eingangswellen 11a, 12a angeordnet und permanent drehfest mit der zweiten Eingangswelle 12a verbunden. Das erste Losrad Z52a der fünften Zahnradebene Z5a ist koaxial zu der ersten Vorgelegewelle 13a angeordnet und drehbar auf der ersten Vorgelegewelle 13a gelagert. Das zweite Losrad Z53a der fünften Zahnradebene Z5a ist koaxial zu der zweiten Vorgelegewelle 14a angeordnet und drehbar auf der zweiten Vorgelegewelle 14a gelagert. Das Festrad Z51a und das erste Losrad Z52a bilden eine erste Zahnradpaarung der fünften Zahnradebene Z5a aus, die zur Bildung des Vorwärtsgetriebegangs V7a vorgesehen ist. Das Festrad Z51a und das zweite Losrad Z53a bilden eine zweite Zahnradpaarung der fünften Zahnradebene Z5a aus, die zur Bildung des Vorwärtsgetriebegangs V5a vorgesehen ist. Die fünfte Zahnradebene Z5a weist somit zwei Losräder Z52a, Z53a auf, die beide mit dem Festrad Z51a der fünften Zahnradebene Z5a permanent kämmend verbunden sind. Die fünfte Zahnradebene Z5a ist damit als Doppelradebene ausgebildet.

Sämtliche Festräder Z11a, Z21a, Z31a, Z41a, Z51a der Zahnradebenen Z1a, Z2a, Z3a, Z4a, Z5a sind permanent drehfest mit einer der Eingangswellen 11a, 12a verbunden. Dabei sind drei Festräder Z11a, Z21a, Z31a permanent drehfest mit der ersten Eingangswelle 11a und zwei Festräder Z41a, Z51a permanent drehfest mit der zweiten Eingangswelle 12a verbunden. Koaxial zu der ersten Vorgelegewelle 13a sind die vier Losräder Z12a, Z22a, Z42a, Z52a angeordnet. Koaxial zu der zweiten Vorgelegewelle 14a sind die vier Losräder Z13a, Z33a, Z43a, Z53a angeordnet. Koaxial zu jeder der Vorgelegewellen 13a, 14a sind damit vier der insgesamt acht Losräder Z12a, Z13a, Z22a, Z33a, Z42a, Z43a, Z52a, Z53a angeordnet. Die Abtriebsräder Z01a, Z02a weisen unterschiedliche Zähnezahlen auf, wodurch sich für die beiden Vorgelegewellen 13a, 14a unterschiedliche Final-Drive-Übersetzungen ergeben. Die Final-Drive-Übersetzung für die erste Vorgelegewelle 13a ist länger als die Final-Drive-Übersetzung für die zweite Vorgelegewelle 14a. Grundsätzlich kann das Festrad Z21a, Z31a, Z41a und das permanent kämmend mit dem Festrad Z21a, Z31a, Z41a verbundene Losrad Z22a, Z33a, Z42a zumindest eines der als Einfachradebenen ausgebildeten Zahnradebenen Z2a, Z3a, Z4a gegeneinander vertauscht werden, wodurch ein äquivalent ausgebildetes Doppelkupplungsgetriebe bereitgestellt werden kann.

Zur Bildung der Vorwärtsgetriebegänge V1a, V2a, V3a, V4a, V5a, V6a, V7a, V8a, V9a und der Rückwärtsgetriebegänge R1a, R2a umfasst das Doppelkupplungsgetriebe genau neun Schalteinheiten S1a, S2a, S3a, S4a, S5a, S6a, S7a, S8a, S9a, die zur Herstellung von Wirkverbindungen zwischen den Eingangswellen 11a, 12a und den Vorgelegewellen 13a, 14a vorgesehen sind. Die neun Schalteinheiten S1a-S9a sind in Verbindung mit den Zahnradebenen Z1a-Z5a zumindest konstruktiv zur Schaltung der neun Vorwärtsgetriebegänge V1a, V2a, V3a, V4a, V5a, V6a, V7a, V8a, V9a und der Rückwärtsgetriebegänge R1a, R2a vorgesehen. Sämtliche Schalteinheiten S1a-S9a sind koaxial zu einer der Vorgelegewellen 13a, 14a angeordnet. Die Schalteinheiten S1a-S9a umfassen jeweils ein erstes Kopplungselement und ein zweites Kopplungselement, die drehfest miteinander verbindbar sind. Das jeweils erste Kopplungselement der Schalteinheiten S1a-S9a ist als ein Gleichlaufkörper ausgebildet, der drehfest mit einer auf dem Gleichlaufkörper angeordneten Schiebemuffe der entsprechenden Schalteinheit S1a-S9a verbunden ist. Das jeweils zweite Kopplungselement der Schalteinheiten S1aS9a weist eine Schaltverzahnung zur drehfesten Verbindung mit der Schiebemuffe auf. Die Schalteinheiten S1a-S9a sind vorzugsweise als synchronisierte Formschlusskupplungen ausgeführt. Insbesondere können die Schalteinheiten S1a-S9a zumindest teilweise als rein formschlüssige Klauenschalteinheiten ohne reibschlüssige Synchronisierung ausgeführt werden, beispielsweise wenn das Doppelkupplungsgetriebe eine an einer der Vorgelegewellen 13a, 14a angeordnete Zentralsynchronisierung aufweist und/oder die Schalteinheiten S1a-S9a mittels der Eingangskupplung synchronisiert werden. Grundsätzlich sind aber auch andere Ausgestaltungen denkbar.

Die ersten acht Schalteinheiten S1a-S8a sind jeweils dazu vorgesehen, ein Losrad Z12a-Z53a drehfest mit einer der Vorgelegewellen 13a, 14a zu verbinden. Die ersten Kopplungselemente dieser acht Schalteinheiten S1a-S8a sind jeweils permanent drehfest mit einer der Vorgelegewellen 13a, 14a und die zweiten Kopplungselemente dieser acht Schalteinheiten S1a-S8a sind jeweils permanent drehfest mit einem der Losräder Z12a-Z53a verbunden. Die neunte Schalteinheit S9a ist dagegen dazu vorgesehen, zwei Losräder Z22a, Z42a drehfest miteinander zu verbinden. Das erste Kopplungselement und das zweite Kopplungselement dieser neunten Schalteinheit S9a sind jeweils permanent drehfest mit einem Losrad Z22a, Z42a verbunden. Die Schalteinheiten S1a, S2a, die Schalteinheiten S3a, S4a, die Schalteinheiten S5a, S6a und die Schalteinheiten S7a, S8a sind jeweils paarweise zusammengefasst. Die jeweils zusammengefassten Schalteinheiten S1a, S2a, S3a, S4a, S5a, S6a, S7a, S8a bilden jeweils eine Doppelschalteinheit aus und umfassen jeweils ein gemeinsames erstes Kopplungselement und damit eine gemeinsame Schiebemuffe, die zur Schaltung der jeweils einen Schalteinheit S1a, S3a, S5a, S7a in eine erste Schaltstellung, zur Entkopplung in eine mittlere Neutralstellung und zur Schaltung der jeweils anderen Schalteinheit S2a, S4a, S6a, S8a in eine zweite Schaltstellung geschaltet wird. Die als Doppelschalteinheiten zusammengefassten Schalteinheiten S1a, S2a, S3a, S4a, S5a, S6a, S7a, S8a sind jeweils nur einseitig schaltbar, d.h. es kann jeweils lediglich eine einzelne der Schalteinheiten S1a, S2a, S3a, S4a, S5a, S6a, S7a, S8a einer Doppelschalteinheit geschaltet werden. Somit sind acht der insgesamt neun Schalteinheiten S1a-S9a zu vier Doppelschalteinheiten zusammengefasst.

Die Schalteinheit S9a ist als eine Einzelschalteinheit ausgeführt. Die neunte Schalteinheit S9a weist eine Schaltstellung, in der die Losräder Z22a, Z42a drehfest miteinander verbunden sind, und eine Neutralstellung, in der die Losräder Z22a, Z42a voneinander entkoppelt sind, auf. Sie umfasst eine Schiebemuffe, die in die Schaltstellung und die Neutralstellung schaltbar ist. Die als Einzelschalteinheit ausgeführte Schalteinheit S9a ist grundsätzlich unabhängig von den restlichen Schalteinheiten S1a-S8a schaltbar, wobei in Abhängigkeit von einer Schaltlogik über eine Aktuatorik zur Schaltung der Schalteinheiten S1a-S8a auch Abhängigkeiten definiert werden können.

Die erste Schalteinheit S1a und die zweite Schalteinheit S2a, die zu einer Doppelschalteinheit zusammengefasst sind, sind koaxial zu der ersten Vorgelegewelle 13a angeordnet. Die Schalteinheiten S1a, S2a sind zwischen der ersten Zahnradebene Z1a und der zweiten Zahnradebene Z2a angeordnet. Die erste Schalteinheit S1a ist dazu vorgesehen, das erste Losrad Z12a der ersten Zahnradebene Z1a und die erste Vorgelegewelle 13a drehfest miteinander zu verbinden. Die zweite Schalteinheit S2a ist dazu vorgesehen, das Losrad Z22a der zweiten Zahnradebene Z2a und die erste Vorgelegewelle 13a drehfest miteinander zu verbinden. Das zweite Kopplungselement der ersten Schalteinheit S1a ist permanent drehfest mit dem ersten Losrad Z12a der ersten Zahnradebene Z1a verbunden. Das erste Kopplungselement, das beiden Schalteinheiten S1a, S2a zugeordnet ist, ist permanent drehfest mit der ersten Vorgelegewelle 13a verbunden. Das zweite Kopplungselement der zweiten Schalteinheit S2a ist permanent drehfest mit dem Losrad Z22a der zweiten Zahnradebene Z2a verbunden. Das erste Kopplungselement der Schalteinheiten S1a, S2a ist zwischen den zweiten Kopplungselementen der Schalteinheiten S1a, S2a angeordnet. Die erste Schalteinheit S1a ist lediglich in dem achten Vorwärtsgetriebegang V8a geschlossen. Die zweite Schalteinheit S2a ist lediglich in dem vierten Vorwärtsgetriebegang V4a geschlossen.

Die dritte Schalteinheit S3a und die vierte Schalteinheit S4a, die zu einer Doppelschalteinheit zusammengefasst sind, sind koaxial zu der ersten Vorgelegewelle 13a angeordnet. Die Schalteinheiten S3a, S4a sind zwischen der vierten Zahnradebene Z4a und der fünften Zahnradebene Z5a angeordnet. Die dritte Schalteinheit S3a ist dazu vorgesehen, das erste Losrad Z42a der vierten Zahnradebene Z4a und die erste Vorgelegewelle 13a drehfest miteinander zu verbinden. Die vierte Schalteinheit S4a ist dazu vorgesehen, das erste Losrad Z52a der fünften Zahnradebene Z5a und die erste Vorgelegewelle 13a drehfest miteinander zu verbinden. Das zweite Kopplungselement der dritten Schalteinheit S3a ist permanent drehfest mit dem ersten Losrad Z42a der vierten Zahnradebene Z4a verbunden. Das erste Kopplungselement, das beiden Schalteinheiten S3a, S4a zugeordnet ist, ist permanent drehfest mit der ersten Vorgelegewelle 13a verbunden. Das zweite Kopplungselement der vierten Schalteinheit S4a ist permanent drehfest mit dem ersten Losrad Z52a der fünften Zahnradebene Z5a verbunden. Das erste Kopplungselement der Schalteinheiten S3a, S4a ist zwischen den zweiten Kopplungselementen der Schalteinheiten S3a, S4a angeordnet. Die dritte Schalteinheit S3a ist lediglich in dem dritten Vorwärtsgetriebegang V3a geschlossen. Die vierte Schalteinheit S4a ist lediglich in dem siebten Vorwärtsgetriebegang V7a und dem neunten Vorwärtsgetriebegang V9a geschlossen.

Die fünfte Schalteinheit S5a und die sechste Schalteinheit S6a, die zu einer Doppelschalteinheit zusammengefasst sind, sind koaxial zu der zweiten Vorgelegewelle 14a angeordnet. Die Schalteinheiten S5a, S6a sind zwischen der erste Zahnradebene Z1a und der dritten Zahnradebene Z3a angeordnet. Die fünfte Schalteinheit S5a ist dazu vorgesehen, das zweite Losrad Z13a der ersten Zahnradebene Z1a und die zweite Vorgelegewelle 14a drehfest miteinander zu verbinden. Die sechste Schalteinheit S6a ist dazu vorgesehen, das Losrad Z33a der dritten Zahnradebene Z3a und die zweite Vorgelegewelle 14a drehfest miteinander zu verbinden. Das zweite Kopplungselement der fünften Schalteinheit S5a ist permanent drehfest mit dem zweiten Losrad Z13a der ersten Zahnradebene Z1a verbunden. Das erste Kopplungselement, das beiden Schalteinheiten S5a, S6a zugeordnet ist, ist permanent drehfest mit der zweiten Vorgelegewelle 14a verbunden. Das zweite Kopplungselement der sechsten Schalteinheit S6a ist permanent drehfest mit dem Losrad Z33a der dritten Zahnradebene Z3a verbunden. Das erste Kopplungselement der Schalteinheiten S5a, S6a ist zwischen den zweiten Kopplungselementen der Schalteinheiten S5a, S6a angeordnet. Die fünfte Schalteinheit S5a ist lediglich in dem sechsten Vorwärtsgetriebegang V6a geschlossen. Die sechste Schalteinheit S6a ist lediglich in dem ersten Vorwärtsgetriebegang V1a und dem zweiten Vorwärtsgetriebegang V2a geschlossen.

Die siebte Schalteinheit S7a und die achte Schalteinheit S8a, die zu einer Doppelschalteinheit zusammengefasst sind, sind koaxial zu der zweiten Vorgelegewelle 14a angeordnet. Die Schalteinheiten S7a, S8a sind zwischen der vierten Zahnradebene Z4a und der fünften Zahnradebene Z5a angeordnet. Die siebte Schalteinheit S7a ist dazu vorgesehen, das zweite Losrad Z43a der vierten Zahnradebene Z4a und die zweite Vorgelegewelle 14a drehfest miteinander zu verbinden. Die achte Schalteinheit S8a ist dazu vorgesehen, das zweite Losrad Z53a der fünften Zahnradebene Z5a und die zweite Vorgelegewelle 14a drehfest miteinander zu verbinden. Das zweite Kopplungselement der siebten Schalteinheit S7a ist permanent drehfest mit dem zweiten Losrad Z43a der vierten Zahnradebene Z4a verbunden. Das erste Kopplungselement, das beiden Schalteinheiten S7a, S8a zugeordnet ist, ist permanent drehfest mit der zweiten Vorgelegewelle 14a verbunden. Das zweite Kopplungselement der achten Schalteinheit S8a ist permanent drehfest mit dem zweiten Losrad Z53a der fünften Zahnradebene Z5a verbunden. Das erste Kopplungselement der Schalteinheiten S7a, S8a ist zwischen den zweiten Kopplungselementen der Schalteinheiten S7a, S8a angeordnet. Die siebte Schalteinheit S7a ist lediglich in den Rückwärtsgetriebegängen R1a, R2a geschlossen. Sie ist lediglich zur Bildung der Rückwärtsgetriebegänge R1a, R2a vorgesehen. Die achte Schalteinheit S8a ist lediglich in dem fünften Vorwärtsgetriebegang V5a geschlossen.

Die neunte Schalteinheit S9a ist koaxial zu der ersten Vorgelegewelle 14a angeordnet. Die neunte Schalteinheit S9a ist zwischen der zweiten Zahnradebene Z2a und der vierten Zahnradebene Z4a angeordnet. Die neunte Schalteinheit S9a ist dazu vorgesehen, das Losrad Z22a der zweiten Zahnradebene Z2a und das erste Losrad Z42a der vierten Zahnradebene Z4a drehfest miteinander zu verbinden. Das erste Kopplungselement der neunten Schalteinheit S9a ist permanent drehfest mit dem Losrad Z22a der zweiten Zahnradebene Z2a verbunden. Das zweite Kopplungselement der neunten Schalteinheit S9a ist permanent drehfest mit dem ersten Losrad Z42a der vierten Zahnradebene Z4a verbunden. Die neunte Schalteinheit S9a ist lediglich in dem ersten Vorwärtsgetriebegang V1a, dem neunten Vorwärtsgetriebegang V9a und dem Rückwärtsgetriebegang R2a geschlossen. Die neunte Schalteinheit S9a ist lediglich in den Windungsgängen geschlossen.

Eine Schaltlogik für die Vorwärtsgetriebegänge V1a-V9a und die Rückwärtsgetriebegänge R1a, R2a ergibt sich aus der Figurenbeschreibung. Benachbarte Vorwärtsgetriebegänge V1a-V8a sind dabei grundsätzlich untereinander lastschaltbar. Zur Schaltung unter Last wird der zu schaltende Vorwärtsgetriebegang V1a-V8a gebildet, indem die entsprechenden Schalteinheiten S1a, S2a, S3a, S4a, S5a, S6a, S8a, S9a geschlossen werden. Anschließend wird diejenige der Lastschaltkupplungen K1a, K2a, die dem zu schaltenden Vorwärtsgetriebegang V1a-V8a zugeordnet ist, sukzessive geschlossen, während zeitgleich die andere Lastschaltkupplung K1a, K2a, die dem abzuschaltenden Vorwärtsgetriebegang V1a-V8a zugeordnet ist, sukzessive geöffnet wird.

Die ungeraden lastschaltbaren Vorwärtsgetriebegänge V1a, V3a, V5a, V7a sind der ersten Lastschaltkupplung K1a zugeordnet. Die geraden lastschaltbaren Vorwärtsgetriebegänge V2a, V4a, V6a, V8a sind der zweiten Lastschaltkupplung K2a zugeordnet. Dem nicht lastschaltbaren neunten Vorwärtsgetriebegang V9a ist die zweite Lastschaltkupplung K2a zugeordnet. Dem Rückwärtsgetriebegang R1a ist die erste Lastschaltkupplung K1a zugeordnet. Dem Rückwärtsgetriebegang R2a ist die zweite Lastschaltkupplung K2a zugeordnet. Die erste Lastschaltkupplung K1a ist in den Vorwärtsgetriebegängen V1a, V3a, V5a, V7a und dem Rückwärtsgetriebegang R1a geschlossen. Die zweite Lastschaltkupplung K2a ist in den Vorwärtsgetriebegängen V2a, V4a, V6a, V8a, V9a und dem Rückwärtsgetriebegang R2a geschlossen. Zusätzlich mögliche Lastschaltungen zwischen den Vorwärtsgetriebegängen V1a-V8a, die über eine rein sequentielle Lastschaltbarkeit hinausgehen, ergeben sich unmittelbar aus der Schaltlogik.

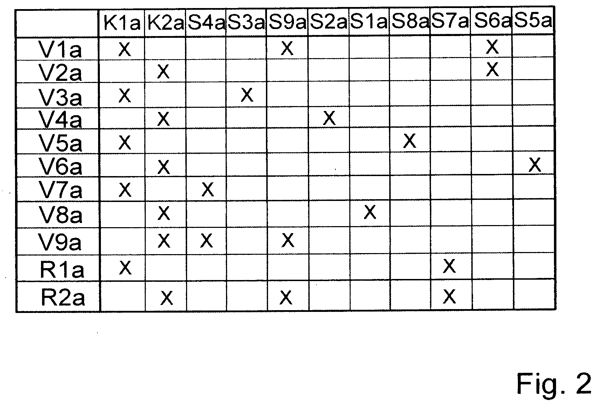

In der Figur 2 ist ein Schaltschema des Doppelkupplungsgetriebes dargestellt. Das Doppelkupplungsgetriebe ist automatisiert oder teilautomatisiert ausgebildet. In dem Schaltschema stellt ein "x" eine geschlossene Schalteinheit bzw. eine geschlossene Lastschaltkupplung in dem entsprechenden Getriebegang dar. Die Bildung der Vorwärtsgetriebegänge V1a-V9a und der Rückwärtsgetriebegänge R1a, R2a durch Schließen der Schalteinheiten S1a-S9a ist in dem Schaltschema in der Figur 2 dargestellt.

Der erste Vorwärtsgetriebegang V1a, der neunte Vorwärtsgetriebegang V9a und der Rückwärtsgetriebegang R2a sind als Windungsgänge ausgebildet. In dem Vorwärtsgetriebegang V1a sind die sechste Schalteinheit S6a und die neunte Schalteinheit S9a geschlossen. Ein Leistungsfluss in dem ersten Vorwärtsgetriebegang V1a wird über die erste Zahnradpaarung der vierten Zahnradebene Z4a, die Zahnradpaarung der zweiten Zahnradebene Z2a und die Zahnradpaarung der dritten Zahnradebene Z3a übertragen. In dem neunten Vorwärtsgetriebegang V9a sind die vierte Schalteinheit S4a und die neunte Schalteinheit S9a geschlossen. Ein Leistungsfluss in dem neunten Vorwärtsgetriebegang V9a wird über die Zahnradpaarung der zweiten Zahnradebene Z2a, die erste Zahnradpaarung der vierten Zahnradebene Z4a und die erste Zahnradpaarung der fünften Zahnradebene Z5a übertragen. In dem Rückwärtsgetriebegang R2a sind die siebte Schalteinheit S7a und die neunte Schalteinheit S9a geschlossen. Ein Leistungsfluss in dem Rückwärtsgetriebegang R2a wird über die Zahnradpaarung der zweiten Zahnradebene Z2a und die für den Rückwärtsgetriebegang vorgesehene Zahnradpaarung der vierten Zahnradebene Z4a übertragen.

Das Doppelkupplungsgetriebe umfasst drei Windungsstufen, die zur Bildung der zwei zumindest konstruktiv schaltbaren Vorwärtsgetriebegänge V1a, V9a und des zumindest konstruktiv schaltbaren Rückwärtsgetriebegangs R2a vorgesehen sind. Das erste Losrad Z42a der vierten Zahnradebene Z4a und das Losrad Z22a der zweiten Zahnradebene Z2a, die in den Vorwärtsgetriebegängen V1a, V9a sowie dem Rückwärtsgetriebegang R2a mittels der Schalteinheit S9a miteinander gekoppelt sind und einen Leistungsfluss übertragen, bilden die erste Windungsstufe. Das Festrad Z21a der zweiten Zahnradebene Z2a und das Festrad Z31a der dritten Zahnradebene Z3a, die mittels der ersten Eingangswelle 11a permanent miteinander gekoppelt sind und in dem ersten Vorwärtsgetriebegang V1a einen Leistungsfluss übertragen, bilden die zweite Windungsstufe. Das Festrad Z41a der vierten Zahnradebene Z4a und das Festrad Z51a der fünften Zahnradebene Z5a, die mittels der zweiten Eingangswelle 12a permanent miteinander gekoppelt sind und in dem neunten Vorwärtsgetriebegang V9a einen Leistungsfluss übertragen, bilden die dritte Windungsstufe. Der erste Vorwärtsgetriebegang V1a ist durch die erste Windungsstufe und die zweite Windungsstufe, der neunte Vorwärtsgetriebegang V9a ist durch die erste Windungsstufe und die dritte Windungsstufe und der Rückwärtsgetriebegang R2a ist durch die erste Windungsstufe gebildet. Das Losrad Z22a der zweiten Zahnradebene Z2a und das erste Losrad Z42a der vierten Zahnradebene Z4a bilden damit eine Windungsstufe für den ersten Vorwärtsgetriebegang V1a, den neunten Vorwärtsgetriebegang V9a und den Rückwärtsgetriebegang R2a aus. Die erste Windungsstufe ist durch die neunte Schalteinheit S9a zuschaltbar. In den restlichen Vorwärtsgetriebegängen V2a-V8a ist jeweils lediglich eine der Zahnradpaarungen der Zahnradebenen Z1a, Z2a, Z3a, Z4a, Z5a an einer Übertragung beteiligt. Die Bildung der restlichen Vorwärtsgetriebegängen V2a-V8a durch Schließen der Schalteinheiten S1-S8a und die Bildung des Rückwärtsgetriebegangs R1a durch Schließen der Schalteinheit S7a ist in der Figur 2 dargestellt.

Die neun Schalteinheiten S1a-S9a des Doppelkupplungsgetriebes weisen insgesamt fünf Schiebemuffen auf. Zur Schaltung der Schiebemuffen der Schalteinheiten S1a-S8a, die als Doppelschalteinheiten ausgebildet sind, weist das Doppelkupplungsgetriebe jeweils einen hydraulischen Schaltaktuator auf. Ein weiterer hydraulischer Schaltaktuator ist für die neunte Schalteinheit S9a vorgesehen. Das Doppelkupplungsgetriebe umfasst somit fünf nicht näher dargestellte Schaltaktuatoren zur Schaltung der fünf Schiebemuffen. Grundsätzlich ist aber auch eine Ausgestaltung mit mehr Schaltaktuatoren denkbar. Die Schaltaktuatoren können dabei beispielsweise in Form doppelt wirkender Zylinder ausgebildet sein. Es sind aber auch elektrische oder pneumatische Schaltaktuatoren zur Schaltung der Schiebemuffen denkbar.

Zur formschlüssigen Verriegelung weist das Doppelkupplungsgetriebe ein Parksperrenrad 15a auf. Das Parksperrenrad 15a kann grundsätzlich an unterschiedlichen Positionen angeordnet werden. Vorzugsweise ist das Parksperrenrad 15a permanent drehfest mit der zweiten Vorgelegewelle 14a verbunden, die eine kürzere Final-Drive-Übersetzung als die erste Vorgelegewelle 13a aufweist. Grundsätzlich kann es aber auch permanent drehfest mit der ersten Vorgelegewelle 13a verbunden sein. Das Parksperrenrad 15a ist vorzugweise auf einer der Eingangskupplung abgewandten Seite der fünften Zahnradebene Z5a angeordnet.

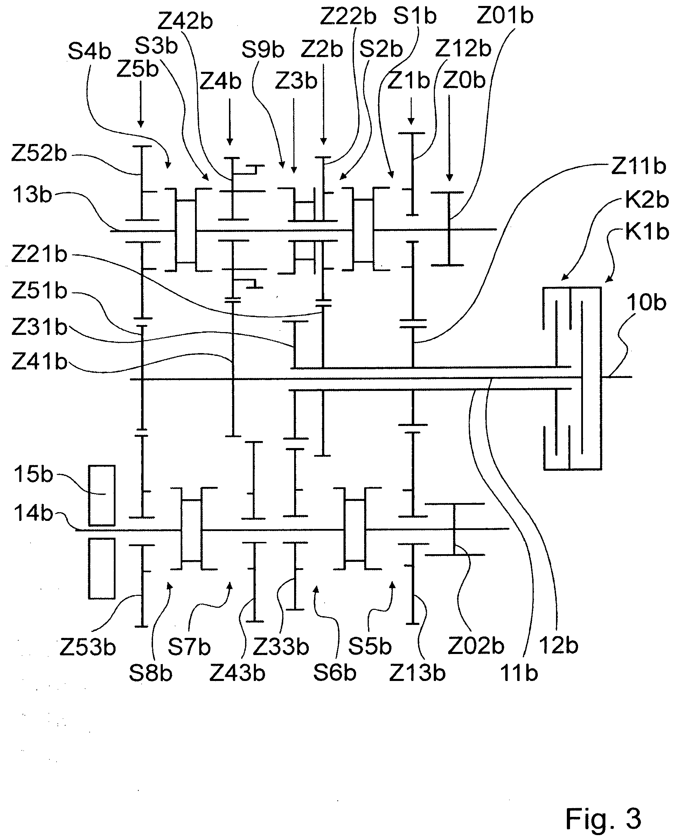

In den Figuren 3 bis 7 sind drei weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung der anderen Ausführungsbeispiele, insbesondere der Figuren 1 und 2, verwiesen werden kann. Zur Unterscheidung der Ausführungsbeispiele wurde der Buchstabe a in den Bezugszeichen des Ausführungsbeispiels in den Figuren 1 und 2 durch die Buchstaben b bis d in den Bezugszeichen der Ausführungsbeispiele der Figuren 3 bis 7 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung der anderen Ausführungsbeispiele, insbesondere der Figuren 1 und 2, verwiesen werden.

Figur 3 zeigt ein alternativ ausgebildetes Doppelkupplungsgetriebe eines Kraftfahrzeugs. Das Doppelkupplungsgetriebe ist zur Schaltung von neun Vorwärtsgetriebegängen V1-V9 und zwei Rückwärtsgetriebegängen R1, R2 vorgesehen. Das Doppelkupplungsgetriebe umfasst eine Antriebswelle 10b, eine an die Antriebswelle 10b angebundene Eingangskupplung mit zwei Lastschaltkupplungen K1b, K2b, eine an die zweite Lastschaltkupplung K2b angebundene erste Eingangswelle 11b, eine an die erste Lastschaltkupplung K1b angebundene zweite Eingangswelle 12b, die die erste Eingangswelle 11b durchsetzt, sowie zwei zu den Eingangswellen 11b, 12b parallel versetzt angeordnete Vorgelegewellen 13b, 14b. Zur Bildung der neun Vorwärtsgetriebegänge V1-V9 und der Rückwärtsgetriebegänge R1, R2 umfasst das Doppelkupplungsgetriebe fünf Zahnradebenen Z1b, Z2b, Z3b, Z4b, Z5b, die jeweils ein permanent drehfest mit einer der Eingangswellen 11b, 12b verbundenes Festrad Z11b, Z21b, Z31b, Z41b, Z51b aufweisen, und neun Schalteinheiten S1b, S2b, S3b, S4b, S5b, S6b, S7b, S8b, S9b. Die Zahnradebenen Z1b, Z2b, Z3b, Z4b, Z5b weisen jeweils zumindest ein Losrad Z12b, Z13b, Z22b, Z33b, Z42b, Z43b, Z52b, Z53b auf, wobei die Losräder Z12b, Z22b, Z42b, Z52b koaxial zur ersten Vorgelegewelle 13b und die Losräder Z13b, Z33b, Z43b, Z53b koaxial zur zweiten Vorgelegewelle 14b angeordnet sind. Zur Schaltung der Rückwärtsgetriebegänge R1, R2 bilden das koaxial zu der ersten Vorgelegewelle 13b angeordnete Losrad Z42b der vierten Zahnradebene Z4b und das koaxial zu der zweiten Vorgelegewelle 14b angeordnete Losrad Z43b der vierten Zahnradebene Z4b eine Zahnradpaarung zur Schaltung der Rückwärtsgetriebegänge R1, R2 aus. Ferner weist das Doppelkupplungsgetriebe zur Ausleitung eines Drehmoments eine Ausgangszahnradebene Z0b auf, die ein permanent drehfest mit der ersten Vorgelegewelle 13b verbundenes Abtriebsrad Z01b und ein permanent drehfest mit der zweiten Vorgelegewelle 14b verbundenes Abtriebsrad Z02b umfasst. Außerdem weist das Doppelkupplungsgetriebe ein Parksperrenrad 15b auf. Die ersten acht Vorwärtsgetriebegänge V1-V8 sind sequentiell lastschaltbar und der neunte Vorwärtsgetriebegang V9 ist nicht lastschaltbar.

Im Unterschied zu dem vorherigen Ausführungsbeispiel weist das erste Losrad Z42b der vierten Zahnradebene Z4b eine Doppelverzahnung auf. Das Festrad Z41b der vierten Zahnradebene Z4b und das zweite Losrad Z43b der vierten Zahnradebene Z4b sind permanent kämmend axial versetzt zueinander mit dem ersten Losrad Z42b der vierten Zahnradebene Z4b verbunden. Das erste Losrad Z42b der vierten Zahnradebene Z4b umfasst eine erste Verzahnung für das Festrad Z41b der vierten Zahnradebene Z4b und eine axial versetzte zweite Verzahnung für das zweite Losrad Z43b der vierten Zahnradebene Z4b. Das erste Losrad Z42b der vierten Zahnradebene Z4b und das Festrad Z41b der vierten Zahnradebene Z4b sind mittels der ersten Verzahnung permanent kämmend miteinander verbunden. Das erste Losrad Z42b der vierten Zahnradebene Z4b und das zweite Losrad Z43b der vierten Zahnradebene Z4b sind mittels der zweiten Verzahnung permanent kämmend miteinander verbunden. Die beiden Verzahnungen unterscheiden sich in einer Zähnezahl und/oder einem Teilkreisdurchmesser. Das Festrad Z41b und das erste Losrad Z42b der vierten Zahnradebene Z4b bilden mittels der ersten Verzahnung des ersten Losrads Z42b eine Zahnradpaarung zur Schaltung des ersten und dritten Vorwärtsgetriebegangs V1, V3 aus. Das erste Losrad Z42b und das zweite Losrad Z43b der vierten Zahnradebene Z4b bilden mittels der zweiten Verzahnung des ersten Losrads Z42b eine Zahnradpaarung zur Schaltung der Rückwärtsgetriebegänge R1, R2 aus.

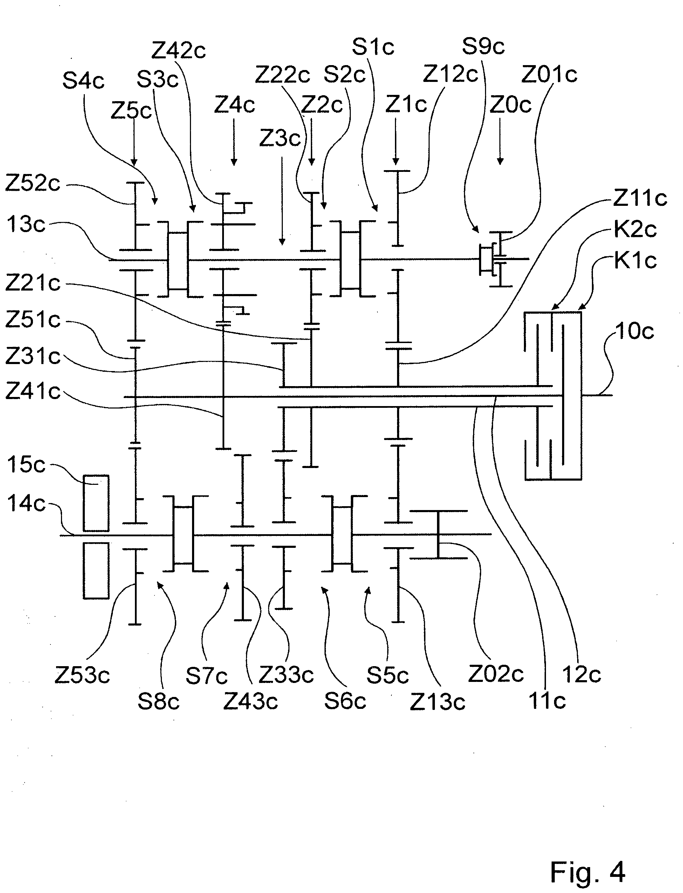

Figur 4 zeigt ein Doppelkupplungsgetriebe eines Kraftfahrzeugs in einem dritten Ausführungsbeispiel, das mit dem in Figur 1 und 2 gezeigten Doppelkupplungsgetriebe und dem in der Figur 3 gezeigten Doppelkupplungsgetriebe kinematisch verwandt ist. Das Doppelkupplungsgetriebe ist zur Schaltung von acht sequentiell lastschaltbaren Vorwärtsgetriebegängen V1c-V8c und zwei Rückwärtsgetriebegängen R1c, R2c vorgesehen. Des Weiteren ist das Doppelkupplungsgetriebe zur Schaltung eines nicht lastschaltbaren Kriechgangs (Crawler) C1c vorgesehen.

Das Doppelkupplungsgetriebe umfasst eine Antriebswelle 10c, eine an die Antriebswelle 10c angebundene Eingangskupplung mit zwei Lastschaltkupplungen K1c, K2c, eine an die zweite Lastschaltkupplung K2c angebundene erste Eingangswellen 11c, eine an die erste Lastschaltkupplung K1c angebundene zweite Eingangswelle 12c, die die erste Eingangswelle 11c durchsetzt, sowie zwei zu den Eingangswellen 11c, 12c parallel versetzt angeordnete Vorgelegewellen 13c, 14c. Zur Bildung der acht Vorwärtsgetriebegänge V1c-V8c, der Rückwärtsgetriebegänge R1c, R2c und des Kriechgangs C1c umfasst das Doppelkupplungsgetriebe fünf Zahnradebenen Z1c, Z2c, Z3c, Z4c, Z5c, die jeweils ein permanent drehfest mit einer der Eingangswellen 11c, 12c verbundenes Festrad Z11c, Z21c, Z31c, Z41c, Z51c aufweisen, und neun Schalteinheiten S1c, S2c, S3c, S4c, S5c, S6c, S7c, S8c, S9c. Die Zahnradebenen Z1c, Z2c, Z3c, Z4c, Z5c weisen jeweils zumindest ein Losrad Z12c, Z13c, Z22c, Z33c, Z42c, Z43c, Z52c, Z53c auf, wobei die Losräder Z12c, Z22c, Z42c, Z52c koaxial zur ersten Vorgelegewelle 13c und die Losräder Z13c, Z33c, Z43c, Z53c koaxial zur zweiten Vorgelegewelle 14c angeordnet sind. Zur Schaltung der Rückwärtsgetriebegänge R1c, R2c bilden das koaxial zu der ersten Vorgelegewelle 13c angeordnete Losrad Z42c der vierten Zahnradebene Z4c und das koaxial zu der zweiten Vorgelegewelle 14c angeordnete Losrad Z43c der vierten Zahnradebene Z4c eine Zahnradpaarung zur Schaltung der Rückwärtsgetriebegänge R1c, R2c aus. Zur Ausleitung eines Drehmoments weist das Doppelkupplungsgetriebe eine Ausgangszahnradebene Z0c mit zwei Abtriebsrädern Z01c, Z02c auf. Außerdem weist das Doppelkupplungsgetriebe ein Parksperrenrad 15c auf.

Im Unterschied zu den vorherigen Ausführungsbeispielen ist eines der Abtriebsräder Z01c, Z02c drehbar auf einer der Vorgelegewellen 13c, 14c gelagert und eines der Abtriebsräder Z01c, Z02c permanent drehfest auf der anderen Vorgelegewelle 13c, 14c angeordnet. Das erste Abtriebsrad Z01c ist koaxial zur ersten Vorgelegewelle 13c angeordnet und drehbar auf der ersten Vorgelegewelle 13c gelagert. Das zweite Abtriebsrad Z02c ist koaxial zu der zweiten Vorgelegewelle 14c angeordnet und permanent drehfest mit der zweiten Vorgelegewelle 14c verbunden. Lediglich die zweite Vorgelegewelle 14c ist mit einem Abtriebszahnrad des Doppelkupplungsgetriebes permanent wirkverbunden. Die erste Vorgelegewelle 13c ist schaltbar von dem Abtriebszahnrad entkoppelbar.

Im weiteren Unterschied zu den vorhergehenden Ausführungsbeispielen ist die neunte Schalteinheit S9c zur Herstellung einer Wirkverbindung zwischen der ersten Vorgelegewelle 13c und dem nicht näher dargestellten Abtriebszahnrad vorgesehen. Die neunte Schalteinheit S9c ist zur Herstellung einer Wirkverbindung zwischen dem koaxial zur ersten Vorgelegewelle 13c angeordneten ersten Abtriebsrad Z01c und der ersten Vorgelegewelle 13c vorgesehen. Die neunte Schalteinheit S9c ist an einer der Eingangskupplung abgewandten Seite des ersten Abtriebsrads Z01c angeordnet. Sie ist zwischen der ersten Zahnradebene Z1c und dem ersten Abtriebsrad Z01c angeordnet. Die neunte Schalteinheit S9c ist dazu vorgesehen, in einer Schaltstellung das erste Abtriebsrad Z01c der Ausgangszahnradebene Z0c und die erste Vorgelegewelle 13c drehfest miteinander zu verbinden und in einer Neutralstellung das erste Abtriebsrad Z01c und die erste Vorgelegewelle 13c voneinander zu entkoppeln. Ein erstes Kopplungselement der neunten Schalteinheit S9c ist permanent drehfest mit der ersten Vorgelegewelle 13c verbunden. Ein zweites Kopplungselement der neunten Schalteinheit S9c ist permanent drehfest mit dem ersten Abtriebsrad Z01c der Ausgangszahnradebene Z0c verbunden. Dem Doppelkupplungsgetriebe fehlt eine Schalteinheit, die dazu vorgesehen ist, zwei Losräder drehfest miteinander zu verbinden.

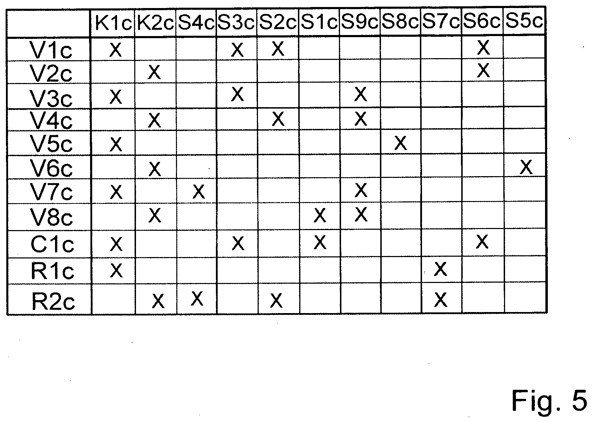

Ein Schaltschema des Doppelkupplungsgetriebes ist in der Figur 5 dargestellt. Die erste Lastschaltkupplung K1c ist in den ungeraden Vorwärtsgetriebegängen V1c, V3c, V5c, V7c, dem Kriechgang C1c und dem Rückwärtsgetriebegang R1c geschlossen. Die zweite Lastschaltkupplung K2c ist in den geraden Vorwärtsgetriebegängen V2c, V4c, V6c, V8c und dem Rückwärtsgetriebegang R2c geschlossen. In dem ersten Vorwärtsgetriebegang V1c sind lediglich die Schalteinheiten S2c, S3c, S6c geschlossen. In dem zweiten Vorwärtsgetriebegang V2c ist lediglich die Schalteinheit S6c geschlossen. In dem dritten Vorwärtsgetriebegang V3c sind lediglich die Schalteinheiten S3c, S9c geschlossen. In dem vierten Vorwärtsgetriebegang V4c sind lediglich die Schalteinheiten S2c, S9c geschlossen. In dem fünften Vorwärtsgetriebegang V5c ist lediglich die Schalteinheit S8c geschlossen. In dem sechsten Vorwärtsgetriebegang V6c ist lediglich die Schalteinheit S5c geschlossen. In dem siebten Vorwärtsgetriebegang V7c sind lediglich die Schalteinheiten S4c, S9c geschlossen. In dem achten Vorwärtsgetriebegang V8c sind lediglich die Schalteinheiten S1c, S9c geschlossen. In dem Kriechgang C1c sind lediglich die Schalteinheiten S1c, S3c, S6c geschlossen. In dem Rückwärtsgetriebegang R1c ist lediglich die Schalteinheit S7c geschlossen. In dem Rückwärtsgetriebegang R2c sind lediglich die Schalteinheiten S2c, S4c, S7c geschlossen.

Der erste Vorwärtsgetriebegang V1c, der Kriechgang C1c und der Rückwärtsgetriebegang R2c sind als Windungsgänge ausgebildet. Ein Leistungsfluss in dem ersten Vorwärtsgetriebegang V1c wird über eine erste Zahnradpaarung der vierten Zahnradebene Z4c, eine Zahnradpaarung der zweiten Zahnradebene Z2c und eine Zahnradpaarung der dritten Zahnradebene Z3c übertragen. Ein Leistungsfluss in dem Kriechgang C1c wird über die erste Zahnradpaarung der vierten Zahnradebene Z4c, eine erste Zahnradpaarung der ersten Zahnradebene Z1c und die Zahnradpaarung der dritten Zahnradebene Z3c übertragen. Ein Leistungsfluss in dem Rückwärtsgetriebegang R2c wird über die Zahnradpaarung der zweiten Zahnradebene Z2c, eine erste Zahnradpaarung der fünften Zahnradebene Z5c und die für den Rückwärtsgetriebegang vorgesehene Zahnradpaarung der vierten Zahnradebene Z4c übertragen.

Das Doppelkupplungsgetriebe umfasst sechs Windungsstufen, die zur Bildung des zumindest konstruktiv schaltbaren Vorwärtsgetriebegangs V1c, des zumindest konstruktiv schaltbaren Kriechgangs C1c und des zumindest konstruktiv schaltbaren Rückwärtsgetriebegangs R2c vorgesehen sind. Das erste Losrad Z42c der vierten Zahnradebene Z4c und das Losrad Z22c der zweiten Zahnradebene Z2c, die in dem ersten Vorwärtsgetriebegang V1c mittels den Schalteinheiten S2c, S3c über die erste Vorgelegewelle 13c miteinander gekoppelt sind und einen Leistungsfluss übertragen, bilden die erste Windungsstufe. Dabei ist die erste Vorgelegewelle 13c und damit die miteinander gekoppelten Losräder Z42c, Z22c von dem ersten Abtriebsrad Z01c durch die neunte Schalteinheit S9a entkoppelt. Das Festrad Z21c der zweiten Zahnradebene Z2c und das Festrad Z31c der dritten Zahnradebene Z3c, die mittels der ersten Eingangswelle 11c permanent miteinander gekoppelt sind und in dem ersten Vorwärtsgetriebegang V1c einen Leistungsfluss übertragen, bilden die zweite Windungsstufe. Das erste Losrad Z42c der vierten Zahnradebene Z4c und das erste Losrad Z12c der ersten Zahnradebene Z1c, die in dem Kriechgang C1c mittels den Schalteinheiten S1c, S3c über die erste Vorgelegewelle 13c miteinander gekoppelt sind und einen Leistungsfluss übertragen, bilden die dritte Windungsstufe. Dabei ist die erste Vorgelegewelle 13c und damit die miteinander gekoppelten Losräder Z42c, Z12c von dem ersten Abtriebsrad Z01c durch die neunte Schalteinheit S9c entkoppelt. Das Festrad Z11c der ersten Zahnradebene Z1c und das Festrad Z31c der dritten Zahnradebene Z3c, die mittels der ersten Eingangswelle 11c permanent miteinander gekoppelt sind und in dem Kriechgang C1c einen Leistungsfluss übertragen, bilden die vierte Windungsstufe. Das Losrad Z22c der zweiten Zahnradebene Z2c und das erste Losrad Z52c der fünften Zahnradebene Z5c, die in dem Rückwärtsgetriebegang R2c mittels den Schalteinheiten S2c, S4c über die erste Vorgelegewelle 13c miteinander gekoppelt sind und einen Leistungsfluss übertragen, bilden die fünfte Windungsstufe. Dabei ist die erste Vorgelegewelle 13c und damit die miteinander gekoppelten Losräder Z22c, Z52c von dem ersten Abtriebsrad Z01c durch die neunte Schalteinheit S9a entkoppelt. Das Festrad Z51c der fünften Zahnradebene Z5c und das Festrad Z41c der vierten Zahnradebene Z4c, die mittels der zweiten Eingangswelle 12c permanent miteinander gekoppelt sind und in dem Rückwärtsgetriebegang R2c einen Leistungsfluss übertragen, bilden die sechste Windungsstufe. Der erste Vorwärtsgetriebegang V1c ist durch die erste Windungsstufe und die zweite Windungsstufe, der Kriechgang C1c ist durch die dritte Windungsstufe und die vierte Windungsstufe und der Rückwärtsgetriebegang R2c ist durch die fünfte Windungsstufe und die sechste Windungsstufe gebildet. Die erste Windungsstufe ist durch die Schalteinheiten S2c, S3c, die dritte Windungsstufe durch die Schalteinheiten S1c, S3c und die fünfte Windungsstufe durch die Schalteinheiten S2c, S4c beim entkoppelten ersten Abtriebsrad Z01c zuschaltbar.

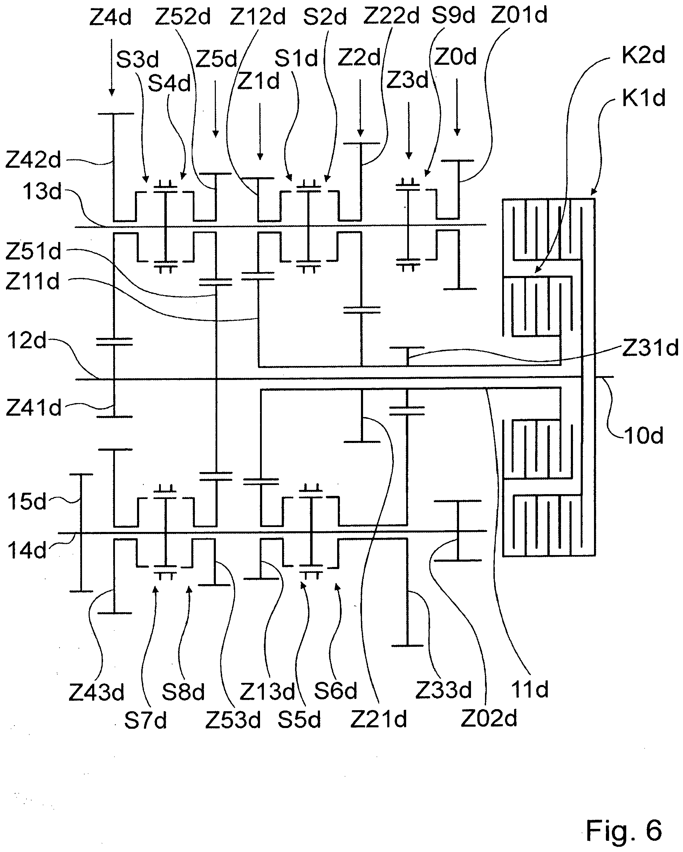

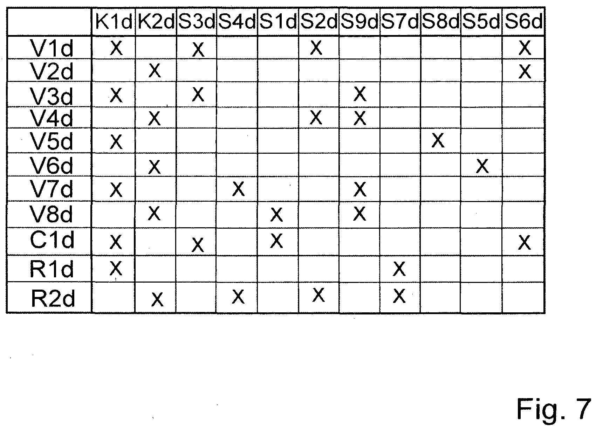

Figur 6 zeigt ein Doppelkupplungsgetriebe eines Kraftfahrzeugs in einem vierten Ausführungsbeispiel, das mit dem in Figur 4 und 5 gezeigten Doppelkupplungsgetriebe kinematisch verwandt ist. Ein Schaltschema des Doppelkupplungsgetriebes ist in der Figur 7 dargestellt. Das Doppelkupplungsgetriebe ist zur Schaltung von acht sequentiell lastschaltbaren Vorwärtsgetriebegängen V1d-V8d und zwei Rückwärtsgetriebegängen R1d, R2d vorgesehen. Des Weiteren ist das Doppelkupplungsgetriebe zur Schaltung eines Kriechgangs (Crawler) C1d vorgesehen.

Das Doppelkupplungsgetriebe umfasst eine Antriebswelle 10d, eine an die Antriebswelle 10d angebundene Eingangskupplung mit zwei Lastschaltkupplungen K1d, K2d, eine an die zweite Lastschaltkupplung K2d angebundene erste Eingangswelle 11d, eine an die erste Lastschaltkupplung K1d angebundene zweite Eingangswelle 12d, die die erste Eingangswelle 11d durchsetzt, sowie zwei zu den Eingangswellen 11d, 12d parallel versetzt angeordnete Vorgelegewellen 13d, 14d. Zur Bildung der acht Vorwärtsgetriebegänge V1d-V8d, der Rückwärtsgetriebegänge R1d, R2d und des Kriechgangs C1d umfasst das Doppelkupplungsgetriebe fünf Zahnradebenen Z1d, Z2d, Z3d, Z4d, Z5d und neun Schalteinheiten S1d, S2d, S3d, S4d, S5d, S6d, S7d, S8d, S9d. Zur Ausleitung eines Drehmoments weist das Doppelkupplungsgetriebe eine Ausgangszahnradebene Z0d mit zwei Abtriebsrädern Z01d, Z02d auf, wobei das erste Abtriebsrad Z01d koaxial zur ersten Vorgelegewelle 13d angeordnet und drehbar auf der ersten Vorgelegewelle 13d gelagert ist und das zweite Abtriebsrad Z02d koaxial zu der zweiten Vorgelegewelle 14d angeordnet und permanent drehfest mit der zweiten Vorgelegewelle 14d verbunden ist.

Im Unterschied zu dem vorherigen Ausführungsbeispiel sind die fünf Zahnradebenen Z1d, Z2d, Z3d, Z4d, Z5d anders angeordnet. Die dritte Zahnradebene Z3d liegt in Bezug auf die restlichen Zahnradebenen Z1d, Z2d, Z4d, Z5d der Eingangskupplung am nächsten. Die dritte Zahnradebene Z3d weist ein Festrad Z31d und ein Losrad Z33d auf. Das Festrad Z31d ist koaxial zu den Eingangswellen 11d, 12d angeordnet und permanent drehfest mit der ersten Eingangswelle 11d verbunden. Das Losrad Z33d ist koaxial zu der zweiten Vorgelegewelle 14d angeordnet und drehbar auf der zweiten Vorgelegewelle 14d gelagert. Das Festrad Z31d und das Losrad Z33d bilden eine Zahnradpaarung der dritten Zahnradebene Z3d aus, die zur Bildung lediglich der Vorwärtsgetriebegänge V1d, V2d vorgesehen ist.

Die zweite Zahnradebene Z2d ist ausgehend von der Eingangskupplung entlang der Haupterstreckungsrichtung nach der dritten Zahnradebene Z3d angeordnet. Die zweite Zahnradebene Z2d weist ein Festrad Z21d und ein Losrad Z22d auf. Das Festrad Z21d ist koaxial zu den Eingangswellen 11d, 12d angeordnet und permanent drehfest mit der ersten Eingangswelle 11d verbunden. Das Losrad Z22d ist koaxial zu der ersten Vorgelegewelle 13d angeordnet und drehbar auf der ersten Vorgelegewelle 13d gelagert. Das Festrad Z21d und das Losrad Z22d bilden eine Zahnradpaarung der zweiten Zahnradebene Z2d aus, die zur Bildung lediglich des Vorwärtsgetriebegangs V4d vorgesehen ist. Die neunte Schalteinheit S9d, die zur Wirkverbindung zwischen dem ersten Abtriebsrad Z01d und der ersten Vorgelegewelle 13d vorgesehen ist, ist zwischen der zweiten Zahnradebene Z2d und der Ausgangszahnradebene Z0d angeordnet.

Die erste Zahnradebene Z1d ist ausgehend von der Eingangskupplung entlang der Haupterstreckungsrichtung nach der zweiten Zahnradebene Z2d angeordnet. Die erste Zahnradebene Z1d umfasst ein Festrad Z11d, ein erstes Losrad Z12d und ein zweites Losrad Z13d. Das Festrad Z11d ist koaxial zu den Eingangswellen 11d, 12d angeordnet und permanent drehfest mit der ersten Eingangswelle 11d verbunden. Das erste Losrad Z12d ist koaxial zu der ersten Vorgelegewelle 13d angeordnet und drehbar auf der ersten Vorgelegewelle 13d gelagert. Das zweite Losrad Z13d ist koaxial zu der zweiten Vorgelegewelle 14d angeordnet und drehbar auf der zweiten Vorgelegewelle 14d gelagert. Das Festrad Z11d und das erste Losrad Z12d bilden eine erste Zahnradpaarung der ersten Zahnradebene Z1d aus, die zur Bildung lediglich des Vorwärtsgetriebegangs V8d vorgesehen ist. Das Festrad Z11d und das zweite Losrad Z13d bilden eine zweite Zahnradpaarung der ersten Zahnradebene Z1d aus, die zur Bildung lediglich des Vorwärtsgetriebegangs V6 vorgesehen ist.

Die fünfte Zahnradebene Z5d ist ausgehend von der Eingangskupplung entlang der Haupterstreckungsrichtung nach der ersten Zahnradebene Z1d angeordnet. Die fünfte Zahnradebene Z5d weist ein Festrad Z51d, ein erstes Losrad Z52d und ein zweites Losrad Z53d auf. Das Festrad Z51d ist koaxial zu den Eingangswellen 11d, 12d angeordnet und permanent drehfest mit der zweiten Eingangswelle 12d verbunden. Das erste Losrad Z52d ist koaxial zu der ersten Vorgelegewelle 13d angeordnet und drehbar auf der ersten Vorgelegewelle 13d gelagert. Das zweite Losrad Z53d ist koaxial zu der zweiten Vorgelegewelle 14d angeordnet und drehbar auf der zweiten Vorgelegewelle 14d gelagert. Das Festrad Z51d und das erste Losrad Z52d bilden eine erste Zahnradpaarung der fünften Zahnradebene Z5d aus, die zur Bildung lediglich des Vorwärtsgetriebegangs V7d vorgesehen ist. Das Festrad Z51d und das zweite Losrad Z53d bilden eine zweite Zahnradpaarung der fünften Zahnradebene Z5d aus, die zur Bildung lediglich des Vorwärtsgetriebegangs V5d vorgesehen ist.

Die vierte Zahnradebene Z4d ist ausgehend von der Eingangskupplung entlang der Haupterstreckungsrichtung nach der fünften Zahnradebene Z5d angeordnet. Die vierte Zahnradebene Z4d weist ein Festrad Z41d, ein erstes Losrad Z42d und zweites Losrad Z43d auf. Das Festrad Z41d ist koaxial zu den Eingangswellen 11d, 12d angeordnet und permanent drehfest mit der zweiten Eingangswelle 12d verbunden. Das erste Losrad Z42d ist koaxial zu der ersten Vorgelegewelle 13d angeordnet und drehbar auf der ersten Vorgelegewelle 13d gelagert. Das zweite Losrad Z43d ist koaxial zu der zweiten Vorgelegewelle 14d angeordnet und drehbar auf der zweiten Vorgelegewelle 14d gelagert. Das Festrad Z41d und das Losrad Z42d bilden eine erste Zahnradpaarung der vierten Zahnradebene Z4d aus, die zur Bildung lediglich des Vorwärtsgetriebegangs V3d vorgesehen ist. Das erste Losrad Z42d und das zweite Losrad Z43d bilden eine zweite Zahnradpaarung der vierten Zahnradebene Z4d aus, die gemeinsam mit der ersten Zahnradpaarung der vierten Zahnradebene Z4d zur Bildung lediglich der Rückwärtsgetriebegänge R1d, R2d vorgesehen ist. Die beiden Zahnradpaarungen der vierten Zahnradebene Z4d stellen eine Drehrichtungsumkehr zur Bildung der Rückwärtsgetriebegänge R1d, R2d bereit. Die Losräder Z42d, Z43d der vierten Zahnradebene Z4d bilden eine Zahnradpaarung zur Schaltung der Rückwärtsgetriebegänge R1d, R2d aus.

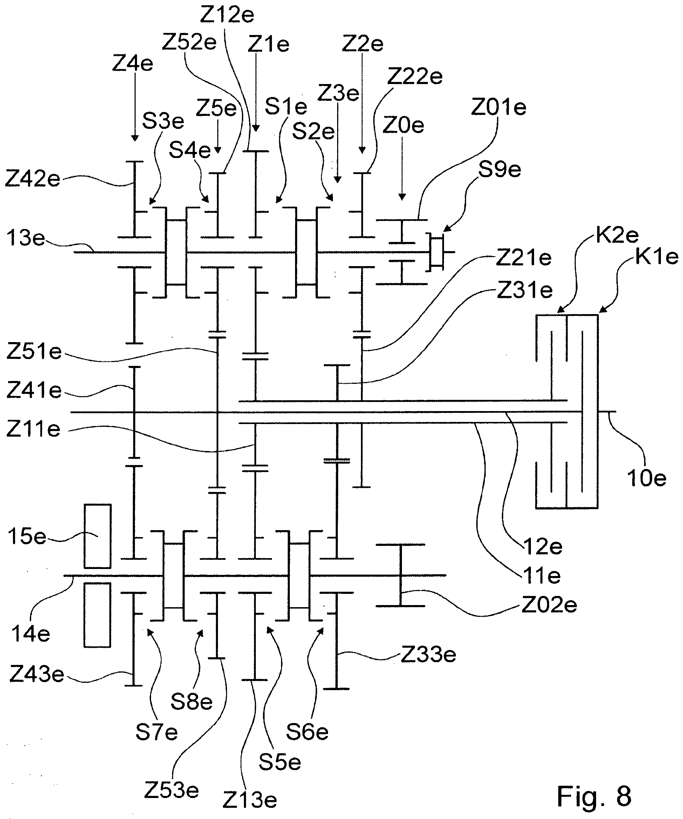

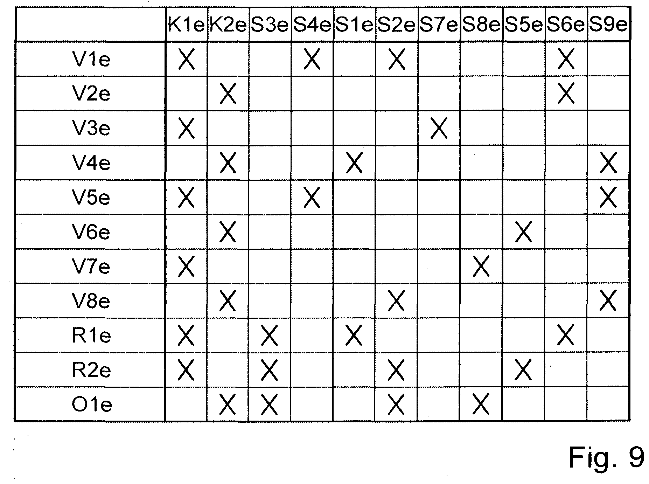

Figur 8 zeigt ein Doppelkupplungsgetriebe eines Kraftfahrzeugs in einem fünften Ausführungsbeispiel, das mit den in den Figuren 4 bis 7 gezeigten Doppelkupplungsgetrieben kinematisch verwandt ist. Ein Schaltschema des Doppelkupplungsgetriebes ist in der Figur 9 dargestellt. Das Doppelkupplungsgetriebe ist zur Schaltung von acht sequentiell lastschaltbaren Vorwärtsgetriebegängen V1e-V8e und zwei Rückwärtsgetriebegängen R1e, R2e vorgesehen. Des Weiteren ist das Doppelkupplungsgetriebe zur Schaltung eines Schongangs (Overdrive) O1e vorgesehen, wodurch ein kraftstoffsparender Vorwärtsgetriebegang bereitgestellt werden kann.

Das Doppelkupplungsgetriebe umfasst eine Antriebswelle 10e, eine an die Antriebswelle 10e angebundene Eingangskupplung mit zwei Lastschaltkupplungen K1e, K2e, eine an die zweite Lastschaltkupplung K2e angebundene erste Eingangswelle 11e, eine an die erste Lastschaltkupplung K1e angebundene zweite Eingangswelle 12e, die die erste Eingangswelle 11e durchsetzt, sowie zwei zu den Eingangswellen 11e, 12e parallel versetzt angeordnete Vorgelegewellen 13e, 14e. Zur Bildung der acht Vorwärtsgetriebegänge V1e-V8e, der Rückwärtsgetriebegänge R1e, R2e und des Schongangs O1e umfasst das Doppelkupplungsgetriebe fünf Zahnradebenen Z1e, Z2e, Z3e, Z4e, Z5e und neun Schalteinheiten S1e, S2e, S3e, S4e, S5e, S6e, S7e, S8e, S9e. Zur Ausleitung eines Drehmoments weist das Doppelkupplungsgetriebe eine Ausgangszahnradebene Z0e mit zwei Abtriebsrädern Z01e, Z02e auf, wobei das erste Abtriebsrad Z01e koaxial zur ersten Vorgelegewelle 13e angeordnet und drehbar auf der ersten Vorgelegewelle 13e gelagert ist und das zweite Abtriebsrad Z02e koaxial zu der zweiten Vorgelegewelle 14e angeordnet und permanent drehfest mit der zweiten Vorgelegewelle 14e verbunden ist.

Im Unterschied zu dem Ausführungsbeispiel gemäß Figur 4 sind die fünf Zahnradebenen Z1e, Z2e, Z3e, Z4e, Z5e anders angeordnet. Die zweite Zahnradebene Z2e liegt in Bezug auf die restlichen Zahnradebenen Z1e, Z3e, Z4e, Z5e der Eingangskupplung am nächsten. Die zweite Zahnradebene Z2e weist ein Festrad Z21e und ein Losrad Z22e auf. Das Festrad Z21e ist koaxial zu den Eingangswellen 11e, 12e angeordnet und permanent drehfest mit der ersten Eingangswelle 11e verbunden. Das Losrad Z22e ist koaxial zu der ersten Vorgelegewelle 13e angeordnet und drehbar auf der ersten Vorgelegewelle 13e gelagert. Das Festrad Z21e und das Losrad Z22e bilden eine einzige Zahnradpaarung der zweiten Zahnradebene Z2e aus, die zur Bildung lediglich des ersten Vorwärtsgetriebegangs V1a und des achten Vorwärtsgetriebegangs V8e vorgesehen ist.

Die dritte Zahnradebene Z3e ist ausgehend von der Eingangskupplung entlang einer Haupterstreckungsrichtung nach der zweiten Zahnradebene Z2e angeordnet. Die dritte Zahnradebene Z3e weist ein Festrad Z31e und ein Losrad Z33e auf. Das Festrad Z31e ist koaxial zu den Eingangswellen 11e, 12e angeordnet und permanent drehfest mit der ersten Eingangswelle 11e verbunden. Das Losrad Z33e ist koaxial zu der zweiten Vorgelegewelle 14e angeordnet und drehbar auf der zweiten Vorgelegewelle 14e gelagert. Das Festrad Z31e und das Losrad Z33e bilden eine einzige Zahnradpaarung der dritten Zahnradebene Z3e aus, die zur Bildung lediglich der Vorwärtsgetriebegänge V1e, V2e und des Rückwärtsgetriebegangs R1e vorgesehen ist.

Die erste Zahnradebene Z1e ist ausgehend von der Eingangskupplung entlang der Haupterstreckungsrichtung nach der dritten Zahnradebene Z3e angeordnet. Die erste Zahnradebene Z1e umfasst ein Festrad Z11e, ein erstes Losrad Z12e und ein zweites Losrad Z13e. Das Festrad Z11e ist koaxial zu den Eingangswellen 11e, 12e angeordnet und permanent drehfest mit der ersten Eingangswelle 11e verbunden. Das erste Losrad Z12e ist koaxial zu der ersten Vorgelegewelle 13e angeordnet und drehbar auf der ersten Vorgelegewelle 13e gelagert. Das zweite Losrad Z13e ist koaxial zu der zweiten Vorgelegewelle 14e angeordnet und drehbar auf der zweiten Vorgelegewelle 14e gelagert. Das Festrad Z11e und das erste Losrad Z12e bilden eine erste Zahnradpaarung der ersten Zahnradebene Z1e aus, die zur Bildung lediglich des Vorwärtsgetriebegangs V4e und des Rückwärtsgetriebegangs R1e vorgesehen ist. Das Festrad Z11e und das zweite Losrad Z13e bilden eine zweite Zahnradpaarung der ersten Zahnradebene Z1e aus, die zur Bildung lediglich des Vorwärtsgetriebegangs V6e vorgesehen ist.

Die fünfte Zahnradebene Z5e ist ausgehend von der Eingangskupplung entlang der Haupterstreckungsrichtung nach der ersten Zahnradebene Z1e angeordnet. Die fünfte Zahnradebene Z5e weist ein Festrad Z51e, ein erstes Losrad Z52e und ein zweites Losrad Z53e auf. Das Festrad Z51e ist koaxial zu den Eingangswellen 11e, 12e angeordnet und permanent drehfest mit der zweiten Eingangswelle 12e verbunden. Das erste Losrad Z52e ist koaxial zu der ersten Vorgelegewelle 13e angeordnet und drehbar auf der ersten Vorgelegewelle 13e gelagert. Das zweite Losrad Z53e ist koaxial zu der zweiten Vorgelegewelle 14e angeordnet und drehbar auf der zweiten Vorgelegewelle 14e gelagert. Das Festrad Z51e und das erste Losrad Z52e bilden eine erste Zahnradpaarung der fünften Zahnradebene Z5e aus, die zur Bildung lediglich des Vorwärtsgetriebegangs V5e vorgesehen ist. Das Festrad Z51e und das zweite Losrad Z53e bilden eine zweite Zahnradpaarung der fünften Zahnradebene Z5e aus, die zur Bildung lediglich des Vorwärtsgetriebegangs V7e vorgesehen ist.

Die vierte Zahnradebene Z4e ist ausgehend von der Eingangskupplung entlang der Haupterstreckungsrichtung nach der fünften Zahnradebene Z5e angeordnet. Die vierte Zahnradebene Z4e weist ein Festrad Z41e, ein erstes Losrad Z42e und zweites Losrad Z43e auf. Das Festrad Z41e ist koaxial zu den Eingangswellen 11e, 12e angeordnet und permanent drehfest mit der zweiten Eingangswelle 12e verbunden. Das erste Losrad Z42e ist koaxial zu der ersten Vorgelegewelle 13e angeordnet und drehbar auf der ersten Vorgelegewelle 13e gelagert. Das erste Losrad Z42e der vierten Zahnradebene Z4e ist lediglich zur Bildung der Rückwärtsgetriebegänge R1e, R2e vorgesehen. Es ist zur Drehrichtungsumkehr vorgesehen. Das zweite Losrad Z43e ist koaxial zu der zweiten Vorgelegewelle 14e angeordnet und drehbar auf der zweiten Vorgelegewelle 14e gelagert. Das erste Losrad Z42e und das zweite Losrad Z43e bilden eine erste Zahnradpaarung der vierten Zahnradebene Z4e aus, die zur Bildung lediglich der Rückwärtsgetriebegänge R1e, R2e vorgesehen ist. Das Festrad Z41e und das zweite Losrad Z43e bilden eine zweite Zahnradpaarung der vierten Zahnradebene Z4e aus, die zur Bildung des Vorwärtsgetriebegangs V3e vorgesehen ist. Die erste Zahnradpaarung der vierten Zahnradebene Z4e ist gemeinsam mit der zweiten Zahnradpaarung der vierten Zahnradebene Z4e zur Bildung der Rückwärtsgetriebegänge R1e, R2e vorgesehen. Die beiden Zahnradpaarungen der vierten Zahnradebene Z4e stellen eine Drehrichtungsumkehr zur Bildung der Rückwärtsgetriebegänge R1e, R2e bereit.

Im weiteren Unterschied zu dem Ausführungsbeispiel gemäß Figur 4 ist die neunte Schalteinheit S9e, die zur Wirkverbindung zwischen dem ersten Abtriebsrad Z01e und der ersten Vorgelegewelle 13e vorgesehen ist, an einer der Eingangskupplung zugewandten Seite des ersten Abtriebsrads Z01e angeordnet.

## Patentansprüche

1. Doppelkupplungsgetriebe mit zwei Eingangswellen (11a, 12a; 11b, 12b), die jeweils zur Anbindung an eine Lastschaltkupplung (K1a, K2a; K1b, K2b) vorgesehen sind, mit einer ersten zu den Eingangswellen (11a, 12a; 11b, 12b) parallel versetzt angeordneten Vorgelegewelle (13a; 13b), mit einer zweiten zu den Eingangswellen (11a, 12a; 11b, 12b) parallel versetzt angeordneten Vorgelegewelle (14a; 14b), mit zumindest fünf Zahnradebenen (Z1a-Z5a; Z1b-Z5b), die jeweils ein permanent drehfest mit einer der Eingangswellen (11a, 12a; 11b, 12b) verbundenes Festrad (Z11a-Z51a; Z11b-Z51b) aufweisen, wobei eine der Zahnradebenen (Z4a; Z4b) ein koaxial zu der ersten Vorgelegewelle (13a; 13b) angeordnetes Losrad (Z42a; Z42b) und ein koaxial zu der zweiten Vorgelegewelle (14a; 14b) angeordnetes Losrad (Z43a; Z43b) aufweist, die eine Zahnradpaarung zur Schaltung zumindest eines Rückwärtsgetriebegangs (R1a, R2a) ausbilden, mit zumindest neun Schalteinheiten (S1a-S9a; S1b-S9b) zur Herstellung von Wirkverbindungen zwischen den Eingangswellen (11a, 12a; 11b, 12b) und den Vorgelegewellen (13a, 14a; 13b, 14b), die in Verbindung mit den Zahnradebenen (Z1a-Z5a; Z1b-Z5b) zumindest konstruktiv zur Schaltung von zumindest acht sequentiell schaltbaren Vorwärtsgetriebegängen (V1a-V8a) und des zumindest einen Rückwärtsgetriebegangs (R1a, R2a) vorgesehenen sind, mit einem permanent drehfest mit der ersten Vorgelegewelle (13a; 13b) verbundenen Abtriebsrad (Z01a; Z01b) und mit einem permanent drehfest mit der zweiten Vorgelegewelle (14a; 14b) verbundenen Abtriebsrad (Z02a; Z02b),
**dadurch gekennzeichnet, dass**
die erste Zahnradebene (Z1a; Z1b) eines der permanent drehfest mit der ersten Eingangswelle (11a; 11b) verbundenen Festräder (Z11a; Z11b), ein koaxial zu der ersten Vorgelegewelle (13a; 13b) angeordnetes erstes Losrad (Z12a; Z12b), das gemeinsam mit dem Festrad (Z11a; Z11b) der ersten Zahnradebene (Z1a; Z1b) eine Zahnradpaarung zur Schaltung zumindest des achten Vorwärtsgetriebegangs (V8a) ausbildet, und ein koaxial zu der zweiten Vorgelegewelle (14a; 14b) angeordnetes zweites Losrad (Z13a; Z13b), das gemeinsam mit dem Festrad (Z11a; Z11b) der ersten Zahnradebene (Z1a; Z1b) eine Zahnradpaarung zur Schaltung zumindest des sechsten Vorwärtsgetriebegangs (V6a) ausbildet, aufweist, wobei eine der Schalteinheiten (S1a; S1b) dazu vorgesehen ist, das erste Losrad (Z12a; Z12b) der ersten Zahnradebene (Z1a; Z1b) und die erste Vorgelegewelle (13a; 13b) drehfest miteinander zu verbinden, und eine der Schalteinheiten (S5a; S5b) dazu vorgesehen ist, das zweite Losrad (Z13a; Z13b) der ersten Zahnradebene (Z1a; Z1b) und die zweite Vorgelegewelle (14a; 14b) drehfest miteinander zu verbinden.

2. Doppelkupplungsgetriebe nach Anspruch 1,
**dadurch gekennzeichnet, dass**
die zweite Zahnradebene (Z2a; Z2b) eines der permanent drehfest mit der ersten Eingangswelle (11a; 11b) verbundenen Festräder (Z21a; Z21b) und ein koaxial zu der ersten Vorgelegewelle (13a; 13b) angeordnetes Losrad (Z22a; Z22b) aufweist, die eine Zahnradpaarung zur Schaltung zumindest des vierten Vorwärtsgetriebegangs (V4a) ausbilden, wobei eine der Schalteinheiten (S2a; S2b) dazu vorgesehen ist, das Losrad (Z22a; Z22b) der zweiten Zahnradebene (Z2a; Z2b) und die erste Vorgelegewelle (13a; 13b) drehfest miteinander zu verbinden.

3. Doppelkupplungsgetriebe nach einem der vorhergehenden Ansprüche,
**dadurch gekennzeichnet, dass**
die dritte Zahnradebene (Z3a; Z3b) eines der permanent drehfest mit der ersten Eingangswelle (11a; 11b) verbundenen Festräder (Z31a; Z31b) und ein koaxial zu der zweiten Vorgelegewelle (14a; 14b) angeordnetes Losrad (Z33a; Z33b) aufweist, die eine Zahnradpaarung zur Schaltung zumindest des zweiten Vorwärtsgetriebegangs (V2a) ausbilden, wobei eine der Schalteinheiten (S6a; S6b) dazu vorgesehen ist, das Losrad (Z33a; Z33b) der dritten Zahnradebene (Z3a; Z3b) und die zweite Vorgelegewelle (14a; 14b) drehfest miteinander zu verbinden.

4. Doppelkupplungsgetriebe nach einem der vorhergehenden Ansprüche,
**dadurch gekennzeichnet, dass**
die vierte Zahnradebene (Z4a; Z4b) eines der permanent drehfest mit der zweiten Eingangswelle (12a; 12b) verbundenen Festräder (Z41a; Z41b) und die Zahnradpaarung zur Schaltung des zumindest einen Rückwärtsgetriebegangs (R1a, R2a) aufweist, wobei das koaxial zu der ersten Vorgelegewelle (13a; 13b) angeordnete erste Losrad (Z42a; Z42b) der vierten Zahnradebene (Z4a; Z4b) und das Festrad (Z41a; Z41b) der vierten Zahnradebene (Z4a; Z4b) eine Zahnradpaarung zur Schaltung zumindest des dritten Vorwärtsgetriebegangs (V3a) ausbilden.

5. Doppelkupplungsgetriebe nach einem der vorhergehenden Ansprüche,
**dadurch gekennzeichnet, dass**
eine der Schalteinheiten (S3a; S3b) dazu vorgesehen ist, das erste Losrad (Z42a; Z42b) der vierten Zahnradebene (Z4a; Z4b) und die erste Vorgelegewelle (13a; 13b) drehfest miteinander zu verbinden und eine der Schalteinheiten (S7a; S7b) dazu vorgesehen ist, das zweite Losrad (Z43a; Z43b) der vierten Zahnradebene (Z4a; Z4b) und die zweite Vorgelegewelle (14a; 14b) drehfest miteinander zu verbinden.

6. Doppelkupplungsgetriebe nach Anspruch 4 oder 5,
**dadurch gekennzeichnet, dass**
das erste Losrad (Z42b) der vierten Zahnradebene (Z4b) eine Doppelverzahnung aufweist, wobei das Festrad (Z41b) der vierten Zahnradebene (Z4b) und das zweite Losrad (Z43b) der vierten Zahnradebene (Z4b) axial versetzt zueinander mit dem ersten Losrad (Z42b) der vierten Zahnradebene (Z4b) permanent kämmend verbunden sind.

7. Doppelkupplungsgetriebe zumindest nach den Ansprüchen 2 und 4,
**dadurch gekennzeichnet, dass**
eine der Schalteinheiten (S9a; S9b) dazu vorgesehen ist, das erste Losrad (Z42a; Z42b) der vierten Zahnradebene (Z4a; Z4b) und das Losrad (Z22a; Z22b) der zweiten Zahnradebene (Z2a; Z2b) direkt drehfest miteinander zu verbinden.

8. Doppelkupplungsgetriebe nach einem der vorhergehenden Ansprüche,
**dadurch gekennzeichnet, dass**
die fünfte Zahnradebene (Z5a; Z5b) eines der permanent drehfest mit der zweiten Eingangswelle (12a; 12b) verbundenen Festräder (Z51a; Z51b), ein koaxial zu der ersten Vorgelegewelle (13a; 13b) angeordnetes erstes Losrad (Z52a; Z52b), das gemeinsam mit dem Festrad (Z51a; Z51b) der fünften Zahnradebene (Z5a; Z5b) eine Zahnradpaarung zur Schaltung zumindest des siebten Vorwärtsgetriebegangs (V7a) ausbildet, und ein koaxial zu der zweiten Vorgelegewelle (14a; 14b) angeordnetes zweites Losrad (Z53a; Z53b), das gemeinsam mit dem Festrad (Z51a; Z51b) der fünften Zahnradebene (Z5a; Z5b) eine Zahnradpaarung zur Schaltung zumindest des fünften Vorwärtsgetriebegangs (V5a) ausbildet, aufweist, wobei eine der Schalteinheiten (S4a; S4b) dazu vorgesehen ist, das erste Losrad (Z52a; Z52b) der fünften Zahnradebene (Z5a; Z5b) und die erste Vorgelegewelle (13a; 13b) drehfest miteinander zu verbinden, und eine der Schalteinheiten (S8a; S8b) dazu vorgesehen ist, das zweite Losrad (Z53a; Z53b) der fünften Zahnradebene (Z5a; Z5b) und die zweite Vorgelegewelle (14a; 14b) drehfest miteinander zu verbinden.

9. Doppelkupplungsgetriebe zumindest nach den Ansprüchen 2 und 4,
**dadurch gekennzeichnet, dass**
das erste Losrad (Z42a; Z42b) der vierten Zahnradebene (Z4a; Z4b) und das Losrad (Z22a; Z22b) der zweiten Zahnradebene (Z2a; Z2b) zur Ausbildung einer Windungsstufe zur Schaltung zumindest des ersten Vorwärtsgetriebegangs (V1a) vorgesehen sind.

10. Doppelkupplungsgetriebe nach einem der vorhergehenden Ansprüche, **gekennzeichnet durch**
einen neunten Vorwärtsgetriebegang (V9a), der durch zumindest eine Windungsstufe schaltbar ist.

## Claims

1. Twin-clutch gearbox having two input shafts (11a, 12a; 11b, 12b), each of which is provided for connection to a powershift clutch (K1a, K2a; K1b, K2b), having a first layshaft (13a; 13b) arranged parallel to and offset against the input shafts (11a, 12a; 11b, 12b), having a second layshaft (14a; 14b) arranged parallel to and offset against the input shafts (11a, 12a; 11b, 12b), having at least five gear planes (Z1a-Z5a; Z1b-Z5b), each having a fixed gear (Z11a-Z51a; Z11b-Z51b) permanently and non-rotatably connected to one of the input shafts (11a, 12a; 11b, 12b), wherein one of the gear planes (Z4a; Z4b) has an idler gear (Z42a; Z42b) arranged coaxially with the first layshaft (13a; 13b) and an idler gear (Z43a; Z43b) arranged coaxially with the second layshaft (14a; 14b), which gears form a gear pairing for selecting at least one reverse gear (R1a, R2a), having at least nine shifting units (S1a-S9a; S1b-S9b) for establishing operative connections between the input shafts (11a, 12a; 11b, 12b) and the layshafts (13a, 14a; 13b, 14b), which, together with the gear planes (Z1a-Z5a; Z1b-Z5b), are at least constructively provided to select at least eight sequentially selectable forward gears (V1a-V8a) and the at least one reverse gear (R1a, R2a), having a drive gear (Z01a; Z01b) permanently and non-rotatably connected to the first layshaft (13a; 13b) and having an output gear (Z02a; Z02b) permanently and non-rotatably connected to the second layshaft (14a; 14b),
**characterised in that**
the first gear plane (Z1a; Z1b) comprises one of the fixed gears (Z11a; Z11b) permanently and non-rotatably connected to the first input shaft (11a; 11b), a first idler gear (Z12a; Z12b) arranged coaxially with the first layshaft (13a; 13b) and forming together with the fixed gear (Z11a; Z11b) of the first gear plane (Z1a; Z1b) a gear pairing for selecting at least the eighth forward gear (V8a), and a second idler gear (Z13a; Z13b) arranged coaxially with the second layshaft (14a; 14b) and forming together with the fixed gear (Z11a; Z11b) a gear pairing for selecting at least the sixth forward gear (V6a), wherein one of the shifting units (S1a; S1b) is provided to non-rotatably connect the first idler gear (Z12a; Z12b) of the first gear plane (Z1a; Z1b) to the first layshaft (13a; 13b), and wherein one of the shifting units (S5a; S5b) is provided to non-rotatably connect the second idler gear (Z13a; Z13b) of the first gear plane (Z1a; Z1b) to the second layshaft (14a; 14b).

2. Twin-clutch gearbox according to claim 1,
**characterised in that**
the second gear plane (Z2a; Z2b) comprises one of the fixed gears (Z21a; Z21b) permanently and non-rotatably connected to the first input shaft (11a; 11b) and an idler gear (Z22a; Z22b) arranged coaxially with the first layshaft (13a; 13b), which gears form a gear pairing for selecting at least the fourth forward gear (V4a), wherein one of the shifting units (S2a; S2b) is provided to non-rotatably connect the Idler gear (Z22a; Z22b) of the second gear plane (Z2a; Z2b) to the first layshaft (13a; 13b).

3. Twin-clutch gearbox according to any of the preceding claims,
**characterised in that**
the third gear plane (Z3a; Z3b) comprises one of the fixed gears (Z31a; Z31b) permanently and non-rotatably connected to the first input shaft (11a; 11b) and an idler gear (Z33a; Z33b) arranged coaxially with the second layshaft (14a; 14b), which gears form a gear pairing for selecting at least the second forward gear (V2a), wherein one of the shifting units (S6a; S6b) is provided to non-rotatably connect the Idler gear (Z33a; Z33b) of the third gear plane (Z3a; Z3b) to the second layshaft (14a; 14b).

4. Twin-clutch gearbox according to any of the preceding claims,
**characterised in that**
the fourth gear plane (Z4a; Z4b) comprises one of the fixed gears (Z41a; Z41b) permanently and non-rotatably connected to the second input shaft (12a; 12b) and the gear pairing for selecting the at least one reverse gear (R1a; R1b), wherein the first idler gear (Z42a; Z42b), arranged coaxially with the first layshaft (13a; 13b), of the fourth gear plane (Z4a; Z4b) and the fixed gear (Z41a; Z41b) of the fourth gear plane (Z4a; Z4b) form a gear pairing for selecting at least the third forward gear (V3a).

5. Twin-clutch gearbox according to any of the preceding claims,
**characterised in that**
one of the shifting units (S3a; S3b) is provided to non-rotatably connect the first idler gear (Z42a; Z42b) of the fourth gear plane (Z4a; Z4b) to the first layshaft (13a; 13b), and one of the shifting units (S7a; S7b) is provided to non-rotatably connect the second idler gear (Z43a; Z43b) of the fourth gear plane (Z4a; Z4b) to the second layshaft (14a; 14b).

6. Twin-clutch gearbox according to claim 4 or 5,
**characterised in that**
the first idler gear (Z42b) of the fourth gear plane (Z4b) has a twin toothing, wherein the fixed gear (Z41b) of the fourth gear plane (Z4b) and the second idler gear (Z43b) of the fourth gear plane (Z4b) are axially offset with respect to each other and connected for permanent meshing with the first idler gear (Z42b) of the fourth gear plane (Z4b).

7. Twin-clutch gearbox according to at least claims 2 and 4,
**characterised in that**
one of the shifting units (S9a; S9b) is provided to directly and non-rotatably connect the first idler gear (Z42a; Z42b) of the fourth gear plane (Z4a; Z4b) to the idler gear (Z22a; Z22b) of the second gear plane (Z2a; Z2b).

8. Twin-clutch gearbox according to any of the preceding claims,
**characterised in that**
the fifth gear plane (Z5a; Z5b) comprises one of the fixed gears (Z51a; Z51b) permanently and non-rotatably connected to the second input shaft (12a; 12b), a first idler gear (Z52a; Z52b) arranged coaxially with the first layshaft (13a; 13b) and together with the fixed gear (Z51a; Z51b) of the fifth gear plane (Z5a; Z5b) forming a gear pairing for selecting at least the seventh forward gear (V7a), and a second idler gear (Z53a; Z53b) arranged coaxially with the second layshaft (14a; 14b) and together with the fixed gear (Z51a; Z51b) of the fifth gear plane (Z5a; Z5b) forming a gear pairing for selecting at least the fifth forward gear (V5a), wherein one of the shifting units (S4a; S4b) is provided to non-rotatably connect the first idler gear (Z52a; Z52b) of the fifth gear plane (Z5a; Z5b) to the first layshaft (13a; 13b) and one of the shifting units (S8a; S8b) is provided to non-rotatably connect the second idler gear (Z53a; Z53b) of the fifth gear plane (Z5a; Z5b) to the second layshaft (14a; 14b).

9. Twin-clutch gearbox according to at least claims 2 and 4,
**characterised in that**
the first idler gear (Z42a; Z42b) of the fourth gear plane (Z4a; Z4b) and the idler gear (Z22a; Z22b) of the second gear plane (Z2a; Z2b) are provided to form a turn stage for selecting at least the first forward gear (V1a).

10. Twin-clutch gearbox according to any of the preceding claims,
**characterised by**
a ninth forward gear (V9a) selectable by at least one turn stage.

## Revendications

1. Transmission à double embrayage comprenant deux arbres d'entrée (11a, 12a, 11b, 12b) qui se relient respectivement à un embrayage commandé en charge (K1a, K2a, K1b, K2b), comprenant un premier arbre intermédiaire (13a, 13b) décalé parallèlement aux arbres primaires (11a, 12a, 11b, 12b), comprenant un second arbre intermédiaire (14a, 14b) décalé parallèlement aux arbres primaires (11a, 12a, 11b, 12b), comprenant au moins cinq plans d'engrenage (Z1a-Z5A ; Z1b-Z5b) qui présentent respectivement une roue fixe (Z11a-Z51A; Z11b-Z51b) accouplée solidaire en rotation à l'un des arbres primaires (11a, 12a, 11b, 12b), l'un des plans d'engrenage (Z4a, Z4b) présentant une roue libre (Z42a ; Z42B) disposée coaxialement au second arbre intermédiaire (14a, 14b) qui forment une paire d'engrenage pour commuter au moins une marche arrière (R1a, R2a), comprenant au moins neufs unités de commutation (S1a-S9a ; S1b-S9b) pour produire des liaisons d'action entre les arbres primaires (11a, 12a, 11b, 12b) et les arbres intermédiaires (13a, 14a, 13b, 14b) qui en liaison avec les plans d'engrenage (Z1a-Z5A ; Z1b-Z5b) servent à au moins de manière constructive à commuter au moins huit marches avant (V1a-V8A) commutables séquentiellement et ladite marche arrière (R1a, R2a), comprenant un engrenage de sortie (Z01a, Z01b) accouplé solidaire en rotation avec le premier arbre intermédiaire (13a, 13b) et un engrenage de sortie (Z12A, Z12b) accouplé solidaire en rotation avec le second arbre intermédiaire (14a, 14b), **caractérisée en ce que** le premier plan d'engrenage (Z1a, Z1b) de l'une des roues fixes (Z11a, Z11b) accouplée solidaire en rotation avec le premier arbre primaire (11a, 11b), présente une première roue libre (Z12a, Z12b) disposée coaxialement au premier arbre intermédiaire (13a, 13b) qui forme ensemble avec la roue fixe (Z11a, Z11b) du premier plan d'engrenage (Z1a, Z1B) un appariement d'engrenage au moins de la huitième marche avant (V8a), et une seconde roue libre (Z13a, Z13b) disposée coaxialement au second arbre intermédiaire (14A, 14b) qui conjointement avec la roue fixe (Z11a, Z11b) du premier plan d'engrenage (Z1a, Z1b) forme un appariement d'engrenage pour commuter au moins la sixième marche avant (V6a), l'une des unités de commutation (S1a, S1b) sert à accoupler la première roue libre (Z12a, Z12b) du premier plan d'engrenage (Z1a, Z1b) et le premier arbre intermédiaire (13a, 13b) solidaire en rotation, et l'une des unités de commutation (S5A, S5b) sert à accoupler solidaire en rotation la seconde roue libre (Z13a, Z13b) du premier plan d'engrenage (Z1a, Z1b) et le second arbre intermédiaire (14a, 14b).

2. Transmission à double embrayage selon la revendication 1, **caractérisée en ce que** le second plan d'engrenage (Z2a, Z2b) présente l'une des roues fixes (Z21a, Z21b) accouplées solidaire en rotation avec le premier arbre primaire (11a, 11b) et une roue libre (Z22a, Z22b) disposée coaxialement au premier arbre intermédiaire (13a, 13b) qui forment un appariement d'engrenage pour commuter au moins la quatrième marche avant (V4a), l'une des unités de commutations (S2a, S2b) servant à accoupler solidaire en rotation la roue libre (Z22a, Z22b) du second plan d'engrenage (Z2a, Z2b) et le premier arbre intermédiaire (13a, 13b).

3. Transmission à double embrayage selon l'une quelconque des revendications précédentes, **caractérisée en ce que** le troisième plan d'engrenage (Z3a, Z3b) présente l'une des roues fixes accouplées solidaire en rotation au premier arbre primaire (11a, 11b) et une roue libre (Z33a, Z33b) disposée coaxialement au second arbre intermédiaire (14a, 14b) qui forment un appariement pour commuter au moins la deuxième marche avant (V2a), l'une des unités de commutation (S6a,S6b) servant à accoupler solidaire en rotation la roue libre (Z33a, Z33b) du troisième plan d'engrenage (Z3a, Z3b) et le seconde arbre intermédiaire (14a, 14b).

4. Transmission à double embrayage selon l'une quelconque des revendications précédentes, **caractérisée en ce que** le quatrième plan d'engrenage (Z4A, Z4b) présente l'une des roues fixes (Z41a, Z41b) accouplées solidaire en rotation avec le second arbre primaire (12a, 12b) et l'appariement d'engrenage pour commuter ladite marche arrière (R1a, R2a), la première roue libre (Z42a, Z42b) disposée coaxialement au premier arbre intermédiaire (13a, 13b) du quatrième plan d'engrenage (Z4a, Z4b) et la roue fixe (Z41a, Z41b) du quatrième plan d'engrenage (Z4a, Z4b) forment un appariement pour commuter au moins la troisième marche avant (V3a).

5. Transmission à double embrayage selon l'une quelconque des revendications précédentes, **caractérisée en ce que** l'une des unités de commutation (S3a, S3b) sert à accoupler solidaire en rotation la première roue libre (Z42a, Z42b) du quatrième plan d'engrenage (Z4a, Z4b) et le premier arbre intermédiaire (13a, 13b) et l'une des unités de commutation (S7a, S7b) sert à accoupler solidaire en rotation la seconde roue libre (Z43a, Z43b) du quatrième plan d'engrenage (Z4A, Z4b) et le second arbre intermédiaire (14a, 14b).

6. Transmission à double embrayage selon la revendication 4 ou 5, **caractérisée en ce que** la première roue libre (Z42b) du quatrième plan d'engrenage (Z4b) forme une double denture, la roue fixe (Z41b) du quatrième plan d'engrenage (Z4b) et la seconde roue libre (Z43b) du quatrième plan d'engrenage (Z4b) décalées axialement l'une par rapport à l'autre sont accouplées en permanence en s'engrenant avec la première roue libre (Z42bà du quatrième plan d'engrenage (Z4b).

7. Transmission à double embrayage selon les revendications 2 et 4, **caractérisée en ce que** l'une des unités de commutation (S9a, S9b) sert à accoupler directement solidaire en rotation ensemble la première roue libre (Z42a, Z42b) du quatrième plan d'engrenage (Z4a, Z4b) et la roue libre (Z22a, Z22b) du deuxième plan d'engrenage (Z2ab Z2b).

8. Transmission à double embrayage selon l'une quelconque des revendications précédentes, **caractérisée en ce que** le cinquième plan d'engrenage (Z5a, Z5b) forme l'une des roues fixes (Z51a, Z51b) accouplées solidaire en rotation avec le second arbre primaire (12a, 12b), une première roue libre (Z52a, Z52b) disposée coaxialement au premier arbre intermédiaire (13a, 13b), qui conjointement avec la roue fixe (Z51a, Z51b) du cinquième plan d'engrenage (Z5a, Z5b) forme un appariement d'engrenage pour commuter au moins la septième marche avant (V7a), et une seconde roue libre (Z53a, Z53b) disposée coaxialement au second arbre intermédiaire (14a, 14b) qui conjointement avec la roue fixe (Z51a, Z51b) du cinquième plan d'engrenage (Z5a, Z5b) forme un appariement pour commuter au moins la cinquième marche avant (V5a), l'une des unités de commutation (S4a, S4b) servant à accoupler solidaire en rotation la première roue libre (Z52a, Z52b) du cinquième plan d'engrenage (Z5a, Z5b) et le premier arbre intermédiaire (13a, 13b) et l'une des unités de commutation (S8a, S8b) servant à accoupler solidaire en rotation la seconde roue libre (Z53a, Z53b) du cinquième plan d'engrenage (Z5a, Z5b) et le second arbre intermédiaire (14a, 14b).

9. Transmission à double embrayage selon les revendications 2 et 4, **caractérisée en ce que** la première roue libre (Z42a, Z42b) du quatrième plan d'engrenage (Z4a, Z4b) et la roue libre (Z22a, Z22b) du deuxième plan d'engrenage (Z2a, Z2b) servent à former une étape de mise en spire pour commuter au moins la première marche avant (V1a).

10. Transmission à double embrayage selon l'une quelconque des revendications précédentes, **caractérisée par** une neuvième marche avant (V9a) qui peut être commutée par au moins une étape de mise en spire.
